# EUROPEAN PATENT APPLICATION

(11) **EP 4 670 814 A1**
(43) Date of publication of application: **31.12.2025**
(21) Application number: 25185060.8
(22) Date of filing: 25.06.2025
(51) Int. Cl.: B01D 35/147, B01D 35/153, B01D 36/00

(54) **VENT VALVE AND FILTER DEVICE**

(30) Priority: 26.06.2024 JP 2024103385; 20.06.2025 JP 2025105111
(71) Applicant: YAMASHIN-FILTER CORP., Yokohama-shi, Kanagawa 231-0062 (JP)
(72) Inventor: OYAMA, Tatsuya, Yokosuka-shi, Kanagawa, 2390847 (JP); KITAJIMA, Nobuyuki, Yokosuka-shi, Kanagawa, 2390847 (JP); NODOMI, Youichi, Yokosuka-shi, Kanagawa, 2390847 (JP)
(74) Representative: Hasegawa, Kan

(57) **Abstract**

Object:

Air bubbles are removable with the use of an air vent structure having a compact and simple configuration.

Resolution:

An exhaust valve that is provided to a plate-like portion provided in a vicinity of an upper end of a filtration device installed in a tank for storing oil includes a rod-like portion inserted into an air vent hole formed in the plate-like portion, a first stopper provided at an upper end of the rod-like portion, and a second stopper provided at a lower end of the rod-like portion. The second stopper and the rod-like portion integrally form a moving member, and the moving member is formed to float on the oil. A hollow portion provided with one end of the rod-like portion is formed in the first stopper. The rod-like portion is movable between a position at which the first stopper abuts against the air vent hole to close the air vent hole and a position at which the moving member abuts against the air vent hole.

## Description

### Technical Field

The present invention relates to an exhaust valve and a filtration device.

### Background Art

Patent Document 1 discloses a suction strainer in which an air vent hole is formed in an upper plate covering an entire region of an upper end of a substantially tubular filtration portion formed by bending a thin plate in a pleat shape, and a moving member is provided to be movable between a position of closing the air vent hole and a position of opening the air vent hole.

### Citation List

### Patent Literature

Patent Document 1: JP 6830987 B

### Summary of Invention

### Technical Problem

However, in the invention described in Patent Document 1, there may be a risk that oil spouts from an air vent hole when the air vent hole opens depending on an operation state of a device or the like.

The present invention has been made in view of the aforementioned circumstances, and an object of the invention is to provide an exhaust valve and a filtration device that can prevent oil from spouting from an air vent hole.

### Solution to Problem

In order to solve the above-mentioned problem, for example, a valve device according to the present invention is an exhaust valve provided to a plate-like portion provided in a vicinity of an upper end of a filtration device installed in a tank for storing oil, and includes a rod-like portion inserted into an air vent hole formed in the plate-like portion, a first stopper provided at an upper end of the rod-like portion, and a second stopper provided at a lower end of the rod-like portion, wherein the second stopper and the rod-like portion integrally form a moving member, the moving member is formed to float on oil, a hollow portion provided with one end of the rod-like portion is formed in the first stopper, and the rod-like portion is movable between a position at which the first stopper abuts against the air vent hole to close the air vent hole and a position at which the second stopper abuts against the air vent hole.

Further, for example, a filtration device according to the present invention is a filtration device installed in a tank for storing oil, and includes a filtration portion having a tubular shape, a plate-like portion covering an entire region of an upper end of the filtration portion and having an air vent hole formed therein, and an exhaust valve inserted into the air vent hole, wherein the exhaust valve includes a rod-like portion inserted into the air vent hole, a first stopper provided at an upper end of the rod-like portion, and a second stopper provided at a lower end of the rod-like portion, the second stopper and the rod-like portion integrally form a moving member, the moving member is formed to float on oil, a hollow portion provided with one end of the rod-like portion is formed in the first stopper, and the exhaust valve is movable between a position at which the first stopper abuts against the air vent hole to close the air vent hole and a position at which the second stopper abuts against the air vent hole.

According to a valve device or a filtration device according to the present invention, there are provided the rod-like portion inserted into the air vent hole formed in the plate-like portion, the first stopper provided at the upper end of the rod-like portion, and the second stopper provided at the lower end of the rod-like portion. Movement is achieved between the position at which the first stopper abuts against the air vent hole to close the air vent hole and the position at which the second stopper abuts against the air vent hole. In this manner, the moving member abuts against the air vent hole so as to arrange the second stopper on the lower side of the air vent hole. Thus, the oil can be prevented from spouting from the air vent hole.

The first stopper and the second stopper may be formed of different materials. As a result, the first moving member can be formed of rubber or metal.

A hollow portion provided with one end of the rod-like portion may be formed in the first stopper. As a result, the first stopper can be reduced in weight, and assembly of the first stopper and the rod-like portion can be facilitated. In particular, this configuration is advantageous when the first stopper is formed of a heavy material such as rubber and metal.

The first stopper may be formed of an elastically deformable material. As a result, the first stopper is elastically deformed by an external pressure, and the first stopper contacts closely with the upper plate. With this, an excellent sealing performance can be exerted.

The second stopper can abut against the air vent hole, and the second stopper may have a part that is spherical, spherical-cap-shaped, spherical-segment-shaped, conical, or truncated-conical. As a result, the second stopper easily closes the air vent hole having a circular shape, and the oil is easily prevented from spouting. In particular, even when the oil surface is inclined due to inclination of the device or the like, the second stopper can close the air vent hole.

The second stopper may include a main body portion having a side surface that is truncated-conical, truncated-pyramidal, or columnar, and a recessed portion may be formed in a lower end surface of the second stopper. As a result, air accumulates in the recessed portion, and the exhaust valve is easily separated from the plate-like portion. Thus, the air is easily released.

A side surface of the recessed portion may have a shape substantially similar to a shape of the side surface of the main body portion. At a lower end of the second stopper, a width of the recessed portion may be equal to or greater than 0.8 times a width of the main body portion. As a result, the recessed portion is increased in size, and a larger amount of air can accumulate in the recessed portion.

The coupling member may have a through-hole through which a hollow portion of the filtration portion and an outside of the filtration portion communicate with each other, the hole may be provided with a relief valve, and the relief valve may be arranged on an inner side of the cover. As a result, the hydraulic oil before filtration and air that flow out when the relief valve opens are blocked by the cover, the air accumulates inside the cover can be discharged by the exhaust valve. Thus, air mixed in the hydraulic oil can be prevented from being suctioned into a hydraulic pump.

### Advantageous Effects of Invention

According to the present invention, oil can be prevented from spouting from an air vent hole.

### Brief Description of Drawings

FIG. 1 is a diagram illustrating an outline of a tank 100 provided therein with a suction strainer 1 and an exhaust valve 2 according to an embodiment of the present invention.
FIG. 2 is a diagram illustrating an outline of the suction strainer 1.
FIG. 3 is a cross-sectional view illustrating an outline of the exhaust valve 2.
FIG. 4 is a diagram illustrating an outline of a first stopper 21, where (A) is a perspective view, and (B) is a cross-sectional view.
FIG. 5 is a diagram illustrating an outline of a moving member 24, where (A) is a perspective view, (B) is a plan view, and (C) is a cross-sectional view taken along the line A-A of (B).
FIG. 6 is a diagram schematically illustrating a state in which the exhaust valve 2 is positioned at an upper end.
FIG. 7 is a diagram schematically illustrating a state in which the exhaust valve 2 is positioned at a lower end.
FIG. 8 is a diagram illustrating an outline of a first stopper 21A according to a modification example, where (A) is a perspective view, (B) is a plan view, and (C) is a cross-sectional view.
FIG. 9 is a diagram illustrating an outline of a first stopper 21B according to a modification example, where (A) is a perspective view, (B) is a plan view, and (C) is a cross-sectional view.
FIG. 10 is a diagram illustrating an outline of a first stopper 21C according to a modification example, where (A) is a perspective view, (B) is a plan view, and (C) is a cross-sectional view.
FIG. 11 is a diagram illustrating an outline of a first stopper 21D according to a modification example, where (A) is a perspective view, (B) is a plan view, and (C) is a cross-sectional view.
FIG. 12 is a diagram illustrating an outline of a moving member 24A including a second stopper 22A according to a modification example, where (A) is a perspective view, (B) is a plan view, and (C) is a cross-sectional view.
FIG. 13 is a diagram illustrating an outline of a moving member 24B including a second stopper 22B according to a modification example, where (A) is a perspective view, (B) is a plan view, and (C) is a cross-sectional view.
FIG. 14 is a cross-sectional view illustrating an outline of an exhaust valve 2A.
FIG. 15 is a diagram schematically illustrating a state in which a first moving member 21E is positioned at an upper end.
FIG. 16 is a diagram schematically illustrating a state in which a second stopper 22C is positioned at an upper end.
FIG. 17 is a diagram illustrating an outline of a return filter 1A.
FIG. 18 is a diagram illustrating an outline of a return filter 1A, where (A) is a plan view, (B) is a transparent perspective view of main parts.
FIG. 19 is a diagram illustrating an outline of an exhaust valve 2B, where (A) is a cross-sectional view, and (B) is a side view.
FIG. 20 is a diagram illustrating an outline of an exhaust valve 2C, where (A) is a cross-sectional view, and (B) is a side view.
FIG. 21 is a diagram illustrating an outline of an exhaust valve 2D, where (A) is a cross-sectional view, and (B) is a side view.
FIG. 22 is a diagram illustrating an outline of an exhaust valve 2E, where (A) is a cross-sectional view, and (B) is a side view.
FIG. 23 is a diagram illustrating an outline of an exhaust valve 2F, where (A) is a cross-sectional view, and (B) is a side view.
FIG. 24 is a diagram illustrating an outline of a moving member 24G of the exhaust valve, where (A) is a plan view, (B) is a front view, (C) is a bottom view, (D) is a perspective view, and (E) is a side view.
FIG. 25 is a diagram illustrating an outline of a moving member 24H of the exhaust valve, where (A) is a plan view, (B) is a front view, (C) is a bottom view, (D) is a perspective view, and (E) is a side view.
FIG. 26 is a diagram illustrating an outline of a return filter 1B.
FIG. 27 is a diagram illustrating an outline of a return filter 1C.

### Description of Embodiments

Embodiments of the present invention are described below in detail with reference to the drawings. The present invention relates to a filtration device installed in a tank for storing oil or an exhaust valve provided to a filtration device.

### First Embodiment

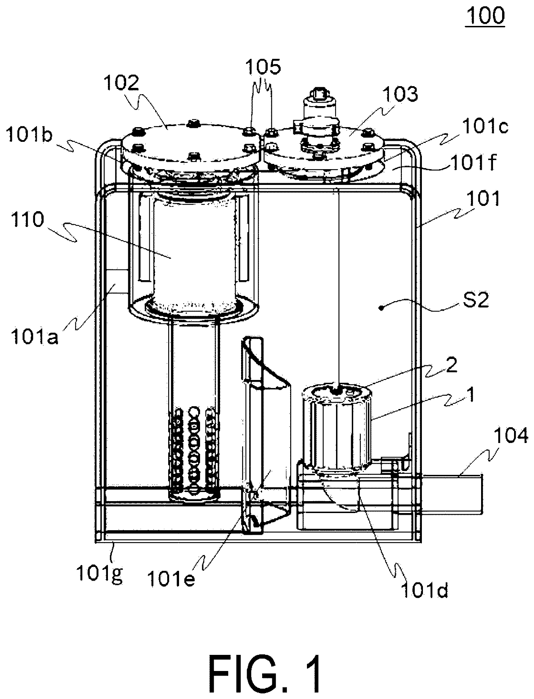

FIG. 1 is a diagram illustrating an outline of a tank 100 provided therein with a suction strainer 1 and an exhaust valve 2 according to an embodiment of the present invention. In FIG. 1, main parts of the tank 100 are illustrated from a perspective view.

The tank 100 is installed in a work machine (for example, a hydraulic device), which is not illustrated, and is provided in a hydraulic circuit of hydraulic oil supplied to the hydraulic device and configured to store the hydraulic oil. In the hydraulic circuit, the hydraulic oil passes through the hydraulic device to be introduced into the tank 100. The tank 100 includes a tank body 101 having a box shape, for example, and this tank body 101 has a hollow inside.

Note that, in the present embodiment, the hydraulic oil is stored in the tank 100. However, the oil stored in the tank is not limited to hydraulic oil.

Inside the tank body 101, the suction strainer 1 to which the exhaust valve 2 is provided and a return filter 110 are provided primarily.

An inflow port 101a configured to allow the hydraulic oil to flow into the tank body 101 is formed on a side surface of the tank body 101. The hydraulic oil that enters through the inflow port 101a is introduced into the return filter 110. The hydraulic oil is filtered by the return filter 110, and is stored in the tank 100.

Further, openings 101b and 101c used for maintenance of the suction strainer 1, the return filter 110, and the like are formed in an upper end surface 101f of the tank body 101. A lid body 102 is attached to the opening 101b, and a lid body 103 is attached to the opening 101c.

Bolt insertion through-holes are formed in peripheral edge portions of the lid bodies 102 and 103. Bolts 105 inserted through the bolt insertion through-holes are screwed into bolt through-holes (not illustrated) of the tank body 101, thereby tightening the lid bodies 102 and 103 to the tank body 101.

An outflow port 101d that allows the hydraulic oil inside the tank body 101 to flow out to a hydraulic pump (not illustrated) is formed in a vicinity of a lower end portion of the tank body 101 (on a side surface of the tank body 101 near a bottom surface 101g in the present embodiment). A suction pipe 104 that leads to a suction port of the hydraulic pump (not illustrated) is fitted into the outflow port 101d from an outer side of the tank body 101.

To prevent foreign matter from entering the suction pipe 104, the suction strainer 1 is provided on an upper side of the outflow port 101d (inner side of the tank body 101). The hydraulic oil stored in the tank 100 is suctioned into the hydraulic pump (not illustrated), flows out to the suction pipe 104 via the suction strainer 1, and is supplied once again to the hydraulic device.

Note that the outflow port 101d is not limited to the position illustrated in FIG. 1 as long as the position is in the vicinity of the lower end portion of the tank body 101. For example, the outflow port 101d may be formed in a bottom surface of the tank body 101.

A partition plate 101e that partitions a space into a space where the suction strainer 1 is provided and a space where the return filter 110 is provided is provided to the bottom surface of the tank body 101. Note that the partition plate 101e is not necessarily required.

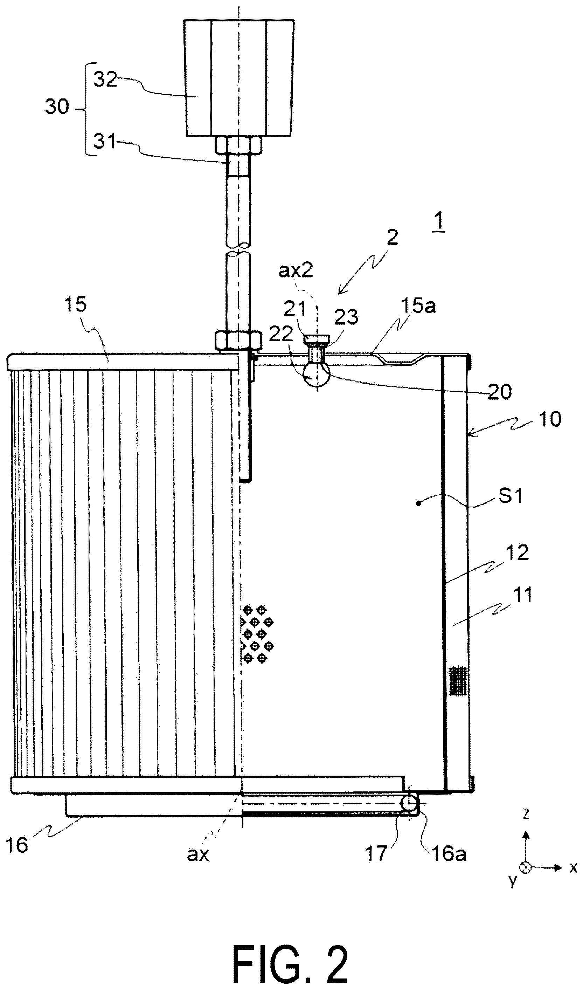

FIG. 2 is a diagram illustrating an outline of the suction strainer 1 (corresponds to the filtration device of the present invention). In FIG. 2, a partial cross-sectional view is given (hatching indicating the cross-section is omitted). The suction strainer 1 primarily includes a strainer portion 10 and the exhaust valve 2. The strainer portion 10 is provided with a rod portion 30.

The strainer portion 10 is a member having a cylindrical shape, and is placed on the upper side of the outflow port 101d (see FIG. 1). The strainer portion 10 primarily includes a filtration member 11, an inner tube 12, and plates 15 and 16.

The inner tube 12 is a member having a hollow cylindrical shape having openings in both ends, and is formed by using a material having high corrosion resistance (for example, stainless steel or resin). The inner tube 12 has through-holes through which the hydraulic oil passes in its substantially entire region.

The filtration member 11 is provided on the outer side of the inner tube 12. The filtration member 11 and the inner tube 12 corresponds to the filtration portion of the present invention. A height of the filtration member 11 is substantially the same as a height of the inner tube 12. The filtration member 11 is formed by bending a sheet-like thin plate including through-holes formed in substantially an entire region thereof in a pleat shape, coupling both ends of the bent thin plate, and rounding it in a cylindrical shape. Note that while the filtration member 11 is formed of a wire mesh made of fine metal (stainless steel, for example) and formed of thin wires woven into a mesh in the present embodiment, a filter paper made of, for example, a synthetic resin and paper may be used. The filtration member 11 is configured to filter the hydraulic oil.

Note that the mode of the filtration member 11 is not limited thereto. For example, one or a plurality of thin plates such as wire mesh may be stacked and rolled to form the filtration member 11.

The plate 15 is provided on one end of the filtration member 11 and the inner tube 12, and the plate 16 is provided on the other end. The plate 15 and the plate 16 are members having a disc-like shape or a bottomed cylindrical shape, and are formed of resin or metal.

The plate 15 and the plate 16 are provided so as to cover the ends (openings) of the filtration member 11 and the inner tube 12. In other words, the filtration member 11 and the inner tube 12 are sandwiched between the plate 15 and the plate 16.

The plate 15 includes a surface 15a (corresponds to the plate-like portion of the present invention) that covers the filtration member 11 and the entire upper end surface pf the inner tube 12 and is substantially orthogonal to an axis ax of the filtration member 11. The surface 15a is provided at the upper end of the suction strainer 1. An air vent hole 20 is formed in the surface 15a. Further, the surface 15a is provided with the exhaust valve 2. The exhaust valve 2 is described in detail later.

A fitting portion 16a having a cylindrical shape that covers the entire lower end surfaces of the filtration member 11 and the inner tube 12 and is externally fitted to the outflow port 101d is formed on the plate 16. A sealing member 17 provided to an inner peripheral surface of the fitting portion 16a prevents the hydraulic oil from entering the inside of the strainer portion 10 from between the plate 16 and the outflow port 101d.

The rod portion 30 primarily includes a rod 31 and an attachment portion 32. The rod 31 is arranged in a posture extending upward from the strainer portion 10. The attachment portion 32 attached to an attachment portion (not illustrated) formed on a back surface of the lid body 103 is provided to an upper end portion of the rod 31.

A spring (not illustrated) is provided in the attachment portion 32 with its entire length compressed. With the suction strainer 1 provided in the tank body 101, the spring urges the rod 31, that is, the strainer portion 10 downward (in the -z direction).

The suction strainer 1 can be pulled out from the tank body 101 during, for example, maintenance by removing the lid body 103 from the tank body 101 and pulling the upper end portion of the rod 31.

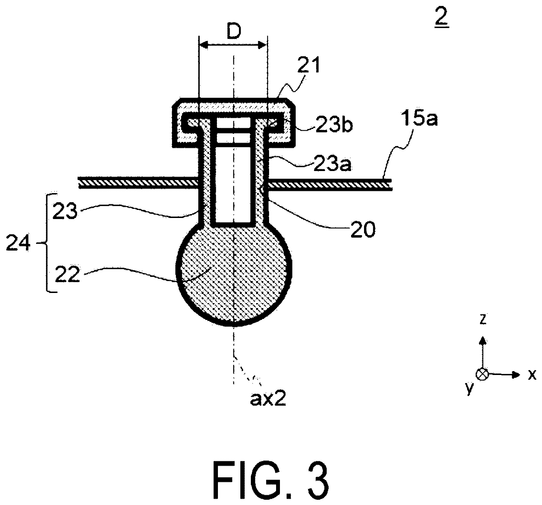

Next, the exhaust valve 2 is described. FIG. 3 is a cross sectional view illustrating an outline of the exhaust valve 2. The exhaust valve 2 primarily includes a first stopper 21, a second stopper 22, and a rod-like portion 23.

The rod-like portion 23 is a member inserted into the air vent hole 20. The first stopper 21 is provided at the upper end of the rod-like portion 23, and the second stopper 22 is provided at the lower end of the rod-like portion 23. The second stopper 22 and the rod-like portion 23 are integrated with each other, and the second stopper 22 and the rod-like portion 23 form a moving member 24. The first stopper 21 is provided with the moving member 24. With this, the exhaust valve 2 is formed.

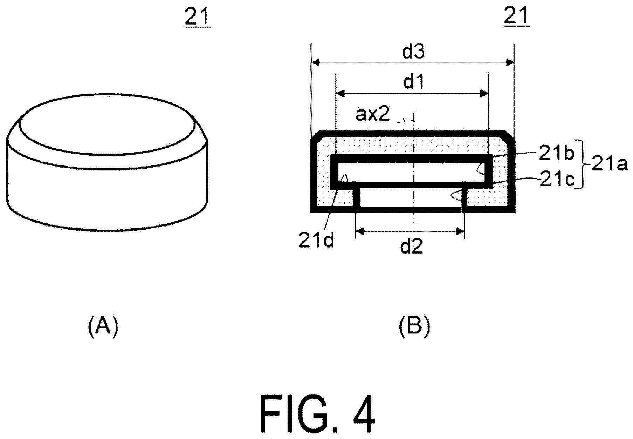

FIG. 4 is a diagram illustrating an outline of the first stopper 21, where (A) is a perspective view and (B) is a cross-sectional view. The first stopper 21 has a columnar shape, and includes a hollow portion 21a formed therein. The hollow portion 21a has a hole 21b and a through-hole 21c that causes the hole 21b and the outside of the first stopper 21 to communicate with each other. A diameter d1 of the hole 21b is larger than a diameter d2 of the through-hole 21c.

The first stopper 21 has a disc-like shape (or a columnar shape) with a diameter d3 larger than a hole diameter D of the air vent hole 20 (see FIG. 3) so as to close the air vent hole 20. Further, the first stopper 21 is formed of an elastically deformable material. The elastically deformable material is rubber, a soft resin, or the like. In the present embodiment, the first stopper 21 is formed of nitrile rubber (NBR).

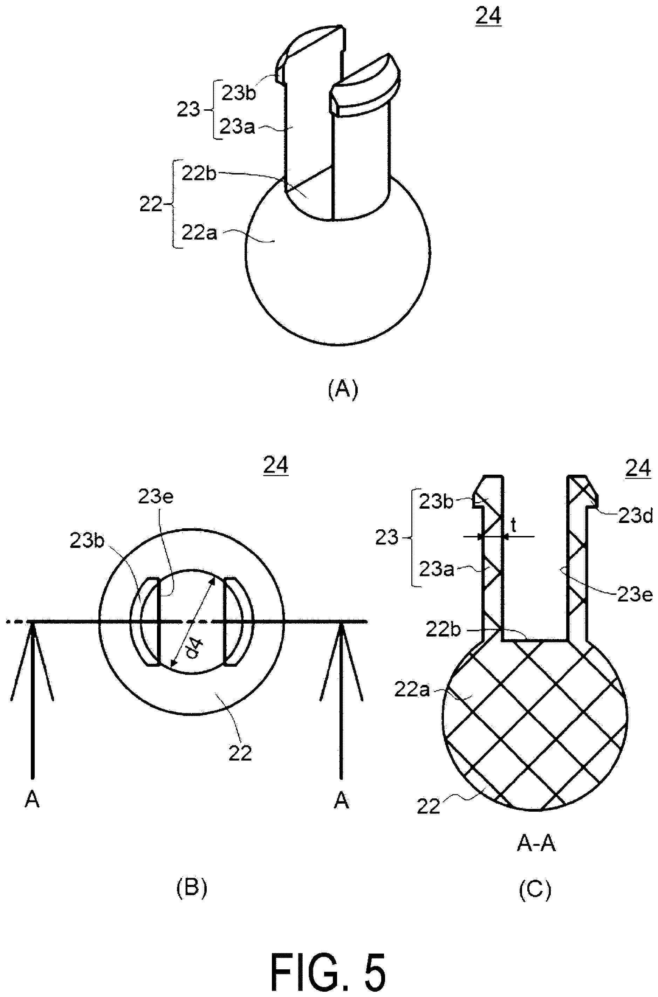

FIG. 5 is a diagram illustrating an outline of the moving member 24, where (A) is a perspective view, (B) is a plan view (a view in the +Z direction), (C) is a cross-sectional view taken along the line A-A of (B). The moving member 24 is formed of a material having a specific gravity smaller than that of the oil so as to float on the oil.

The second stopper 22 includes a spherical main body portion 22a, and a flat portion 22b formed by cutting an upper end surface of the main body portion 22a into a plane. Note that the flat portion 22b of the second stopper 22 is not necessarily required. When the flat portion 22b is not provided, the second stopper 22 has a spherical shape.

The rod-like portion 23 protrudes from the upper end of the second stopper 22 (herein, the flat portion 22b). The rod-like portion 23 includes two rod-like portions 23a each having a rod-like shape, and a coupling portion 23b provided to one end of the rod-like portion 23a (herein, an end opposite to a side provided with the second stopper 22).

The rod-like portion 23a is a part of the column, and a diameter d4 of the column is smaller than the hole diameter D of the air vent hole 20 (see FIG. 3). A slit 23e is formed along the longitudinal direction of the column, and thus the rod-like portion 23a is formed. The slit 23e is formed by cutting the center portion of the columnar member along the center axis. When the slit 23e largely cuts into the column, a thickness t of the rod-like portion 23a becomes thinner, and is deformed easily in a direction in which the diameter is reduced. The coupling portion 23b has a protrusion 23d protruding outward in a circumferential direction.

The description now returns to FIG. 3. The rod-like portion 23a is deformed by a finger or the like to move the protrusion 23d toward a center line ax2. With this, the protrusion 23d passes through the air vent hole 20 and the through-hole 21c. Further, the deformation of the rod-like portion 23a is restored while the protrusion 23d is inserted into the hole 21b. With this, the rod-like portion 23 is provided to the hollow portion 21a. The protrusion 23d abuts against a surface 21d (see (B) of FIG. 4). With this, the moving member 24 is assembled to the first stopper 21 so as to prevent the rod-like portion 23 from coming out of the hollow portion 21a.

The rod-like portion 23a is inserted into the air vent hole 20. As a result, the exhaust valve 2 is attached to the surface 15a of the plate 15, and the rod-like portion 23a can slide inside the air vent hole 20. In other words, the exhaust valve 2 is movable between a position at which the first stopper 21 abuts against the air vent hole 20 to close the air vent hole 20 and a position at which the second stopper 22 abuts against the air vent hole 20 to close the air vent hole 20.

It is necessary for the entire exhaust valve 2 to float due to the buoyant force acting on the second stopper 22. Further, in a case in which the exhaust valve 2 floats, when the entire second stopper 22 is immersed in the oil, there is a possibility that the effect of preventing the oil from spouting from the air vent hole 20 cannot be expected. Thus, it is desired that the weight of the exhaust valve 2 be set so that equilibrium is achieved while at least a part of the second stopper 22 is exposed above the oil surface.

Next, the functions of the suction strainer 1 and the exhaust valve 2 thus configured are described. First, the suction strainer 1 is attached to the tank body 101 storing the hydraulic oil. The rod 31 is held so that the attachment portion 32 is positioned upward (in the +z direction), and the suction strainer 1 is pushed downward (in the -z direction).

The upper end of the strainer portion 10 is covered with the plate 15. Thus, in a case in which the suction strainer 1 is mounted to the inside of the tank body 101, air accumulates on the inner side of the inner tube 12, that is, the lower side of the plate 15. The air accumulating on the lower side of the plate 15 pushes the exhaust valve 2 upward in the +z direction through the air vent hole 20. As a result, as illustrated in FIG. 3, the air vent hole 20 is opened, and the air accumulating on the lower side of the plate 15 is released from the inside of the strainer portion 10 to the tank body 101. As a result, the suction strainer 1 is set in the tank body 101, and the functionality of the suction strainer 1 can be achieved.

In a case in which the hydraulic oil stored in the tank body 101 is suctioned into the hydraulic pump (not illustrated), the hydraulic oil is drawn from the outer side of the filtration member 11 into the strainer portion 10 of the suction strainer 1. The filtration member 11 removes dust and the like from the hydraulic oil, and the hydraulic oil flows out to the inside of the inner tube 12. The oil that has flowed into the inner tube 12 flows outside the strainer portion 10 from below.

In a case in which the hydraulic oil is suctioned from the outer side of the filtration member 11 into the strainer portion 10, the air bubbles contained in the hydraulic oil are suctioned into the strainer portion 10 along with the hydraulic oil. When the air bubbles suctioned into the strainer portion 10 grow and rise, and a certain amount of air accumulates on the lower side of the plate 15, an internal pressure of the suction strainer 1 (a pressure in a space S1 surrounded by the inner tube 12 and the plates 15 and 16 (see FIG. 2)) becomes higher than an external pressure (a pressure in a space S2 positioned outside the suction strainer 1 and inside the tank body 101 (see FIG. 1)), and the exhaust valve 2 is pushed upward in the +Z direction. As a result, as illustrated in FIG. 3, the air vent hole 20 is opened, and the air accumulating on the lower side of the plate 15 is released from the inside of the strainer portion 10 to the tank body 101.

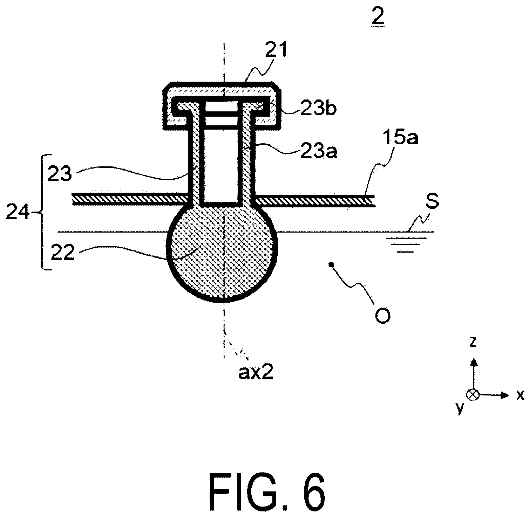

When the hydraulic oil flows out to the inside of the inner tube 12, and the oil surface S rises inside the inner tube 12, the second stopper 22 also rises together with the oil surface. FIG. 6 is a diagram schematically illustrating a state in which the exhaust valve 2 is pushed upward in the +z direction by the hydraulic oil (the exhaust valve 2 is positioned at the upper end). The second stopper 22 is formed of a material having a specific gravity smaller than that of the oil, and floats on the hydraulic oil. Thus, the second stopper 22, that is, the exhaust valve 2 also rises together with the oil surface S, and the second stopper 22 finally abuts against the air vent hole 20 to close the air vent hole 20. As a result, the hydraulic oil can be prevented from spouting from the air vent hole 20. The second stopper 22, that is, the main body portion 22a is spherical, and easily closes the air vent hole 20 having a circular shape.

After that, when the device stops, and the flow of the hydraulic oil stops, the internal pressure of the suction strainer 1 is gradually reduced. Further, when the internal pressure of the suction strainer 1 is equal to or lower than the external pressure, the exhaust valve 2 moves in the -z direction.

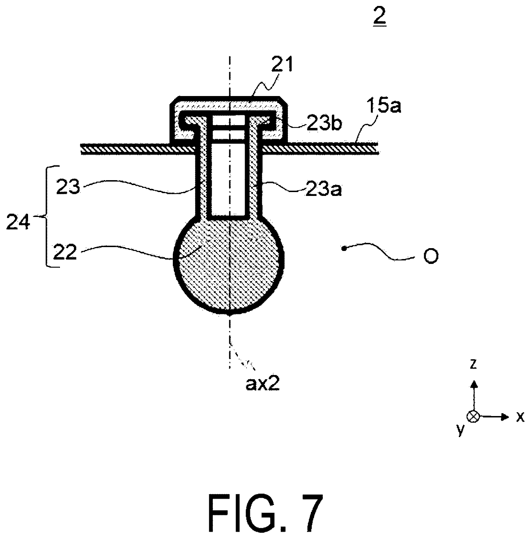

FIG. 7 is a diagram schematically illustrating a state in which the exhaust valve 2 moves in the -z direction (the exhaust valve 2 is positioned at the lower end) after the device stops. The space S1 is filled with the hydraulic oil, and the buoyant force acting on the second stopper 22. However, the internal pressure of the suction strainer 1 is equal to or lower than the external pressure. Thus, the exhaust valve 2 moves in the -z direction by the external pressure. As a result, the first stopper 21 abuts against the air vent hole 20 to close the air vent hole 20, and the air or the hydraulic oil does not flow from the space S2 to the space S1 through the air vent hole 20. Further, the first stopper 21 is elastically deformable. Thus, the exhaust valve 2 is pressed in the -z direction by the external pressure, the first stopper 21 is elastically deformed, and the first stopper 21 exerts an excellent sealing performance.

According to the present embodiment, the exhaust valve 2 includes the first stopper 21 and the second stopper 22, and the second stopper 22 is formed of a material having a specific gravity smaller than that of the oil. With this, when the space S1 is filled with the hydraulic oil, the second stopper 22 closes the air vent hole 20, and the hydraulic oil can be prevented from spouting from the air vent hole 20.

Further, according to the present embodiment, the second stopper 22, that is, the main body portion 22a has a spherical shape. Thus, the air vent hole 20 having a circular shape is easily closed, and the hydraulic oil can easily be prevented from spouting. For example, even when the exhaust valve 2 rises, and the oil surface is inclined due to inclination of the device or the like, the exhaust valve 2 can close the air vent hole 20. Further, for example, even when the exhaust valve 2 rises, and the center axis of the air vent hole 20 and the center axis of the exhaust valve 2 are deviated, the spherical main body portion 22a can correct the deviation of the center axes by abutting against the air vent hole 20.

Further, according to the present embodiment, the first stopper 21 and the moving member 24 are assemble to form one exhaust valve 2, and the exhaust valve thus obtained is only required to be provided to the plate 15. Thus, the exhaust valve 2 with a simple configuration can be obtained.

Further, according to the present embodiment, the first stopper 21 and the moving member 24 are assembled to form the exhaust valve 2. Thus, the first stopper 21 and the second stopper 22 may be formed of different materials. Thus, the material for forming the first stopper 21 can be selected freely, and the first stopper 21 can be formed of an elastically deformable material. The first stopper 21 is elastically deformed, and thus the first stopper 21 exerts an excellent sealing performance. With this, the hydraulic oil can be prevented from spouting from the air vent hole 20.

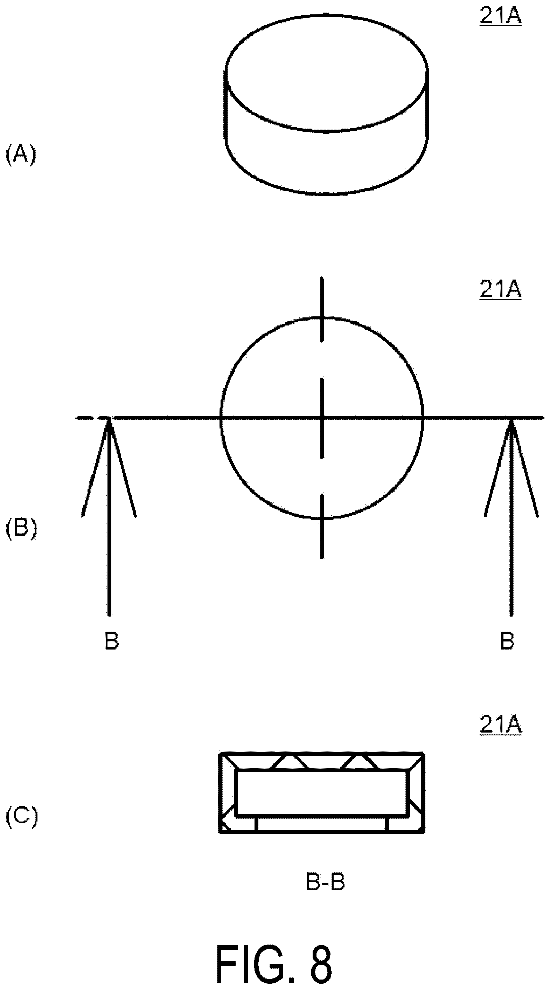

Note that, in the present embodiment, the first stopper 21 has a disc-like shape with a chamfered upper peripheral edge. However, the shape of the first stopper 21 is not limited thereto. FIG. 8 to FIG. 11 are diagrams illustrating outlines of first stoppers 21A to 21D according to modification examples. In each of FIG. 8 to FIG. 11, (A) is a perspective view, (B) is a plan view, and (C) is a cross-sectional view.

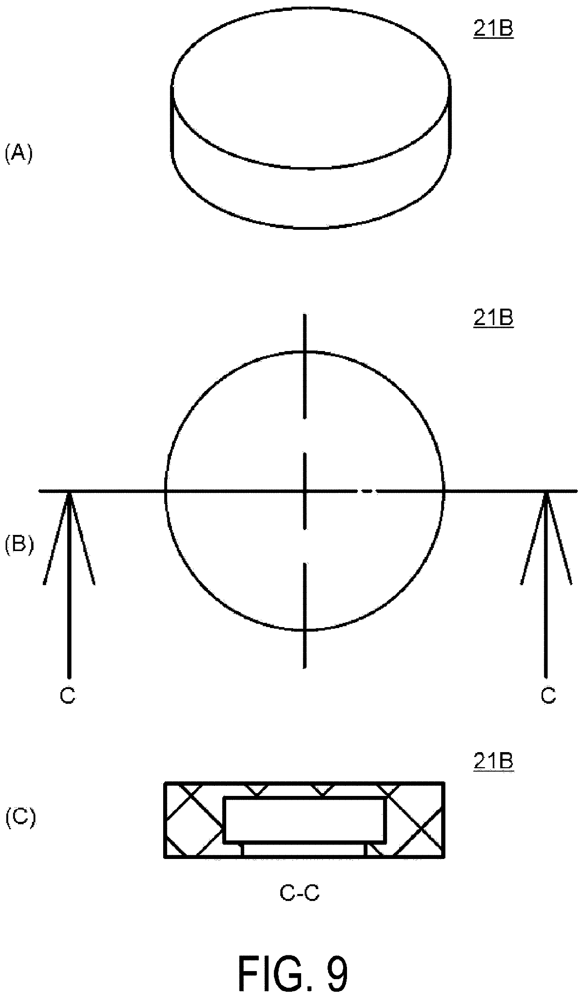

As illustrated in FIG. 8 and FIG. 9, the first stoppers 21A and 21B may each have a disc-like shape. Further, the diameters of the first stoppers 21A and 21B are freely selected. Similarly to the first stopper 21B, the diameter of the first stopper 21B may be approximately twice the hole diameter of the air vent hole 20.

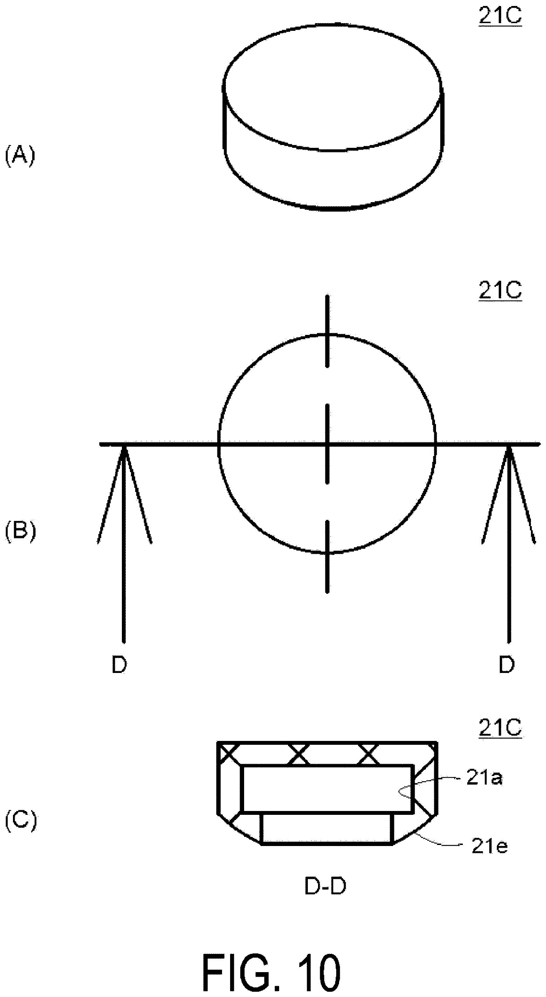

As illustrated in FIG. 10, the tapered surface 21e having a diameter gradually reduced may be formed on a sealing surface on the lower side of the first stopper 21C (the second stopper 22 side). The tapered surface 21e may be a flat surface (C surface), or may be a curved surface (R surface). The first stopper 21C includes the tapered surface 21e that is convex outward. As a result, the tapered surface 21e easily closes the air vent hole 20 having a circular shape.

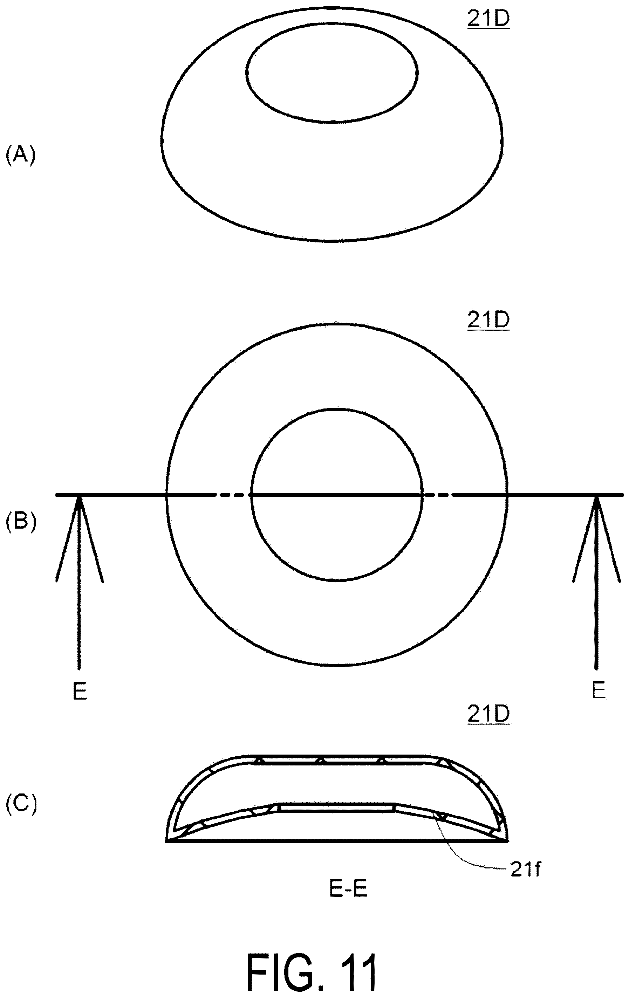

As illustrated in FIG. 11, the first stopper 21D may have a suction cup-like shape. The first stopper 21D includes a funnel-shape sealing surface 21f, and has a hollow inside. Therefore, the sealing surface 21f can be deformed easily. When the sealing surface 21f closely contacts with the surface 15a (see FIG. 2 and the like), the air vent hole 20 can be closed securely.

Further, in the present embodiment, the spherical main body portion 22a serves as the second stopper 22. However, the second stopper 22 may be configured as a portion other than the main body portion 22a. For example, the main body portion 22a may be provided with a flange portion having a disc-like shape. In other words, the second stopper 22 is only required to include the spherical main body portion 22a.

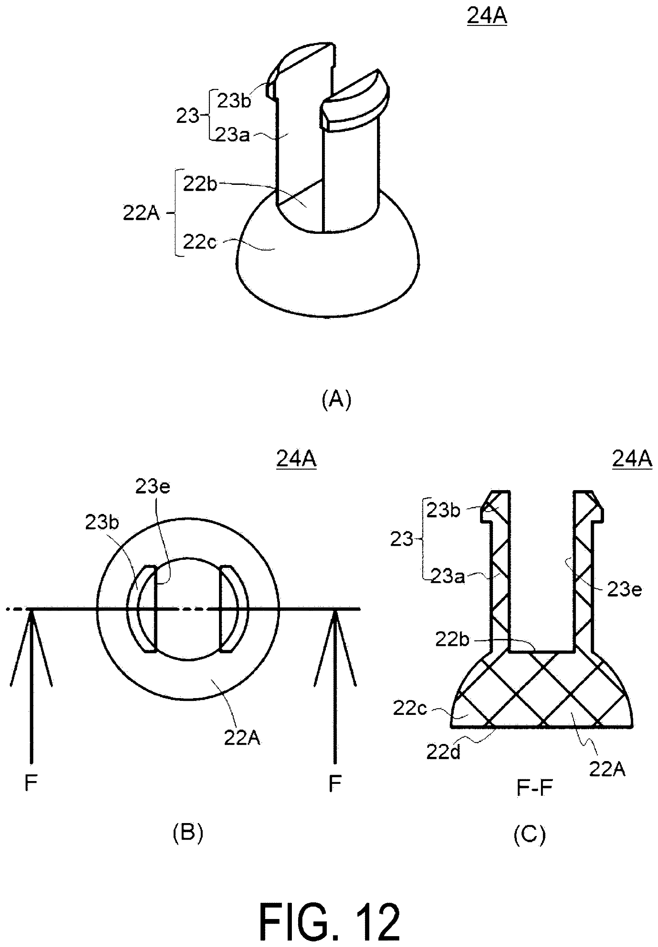

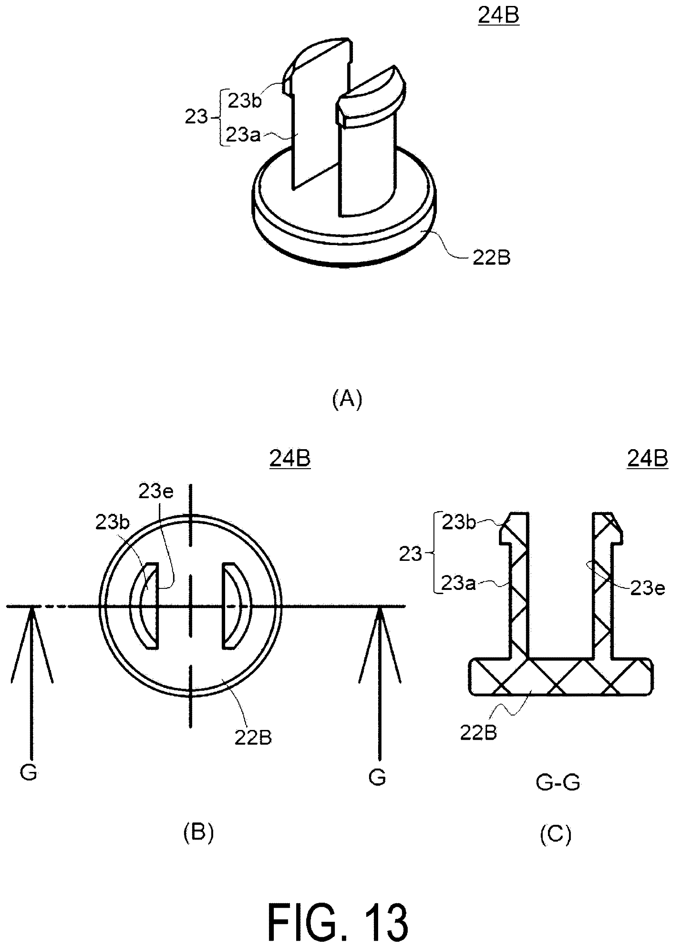

Further, in the present embodiment, the main body portion 22a is spherical. However, the shape of the main body portion (second stopper) is not limited thereto. FIG. 12 and FIG. 13 are diagrams illustrating outlines of moving members 24A and 24B including second stoppers 22A and 22B according to modification examples. In each of FIG. 12 and FIG. 13, (A) is a perspective view, (B) is a plan view, and (C) is a cross-sectional view.

As illustrated in FIG. 12, the moving member 24A includes the second stopper 22A and the rod-like portion 23. The second stopper 22A includes a main body portion 22c having a spherical-segment shape, the flat portion 22b formed by cutting an upper end surface of the main body portion 22c into a plane, and a flat portion 22d formed by cutting a lower end surface of the main body portion 22c into a plane. In other words, the main body portion 22c is a shape obtained by removing the lower half of the main body portion 22a. Note that the flat portions 22b and 22d are not necessarily required. When the flat portion 22b is not provided, the second stopper 22A has a hemispherical shape. Further, the flat portion 22d may be provided with a flange portion having a disc-like shape with a diameter larger than the diameter of the flat portion 22d.

Similarly to the second stopper 22 including the spherical main body portion 22a, when the diameter of the part of the second stopper, which contacts with the air vent hole 20, is gradually changed, the second stopper easily closes the air vent hole 20 having a circular shape, and the hydraulic oil is easily prevented from spouting. In other words, it is desired that the second stopper have a part that is spherical, hemispherical, spherical-cap-shaped, spherical-segment-shaped, conical, or truncated-conical. Herein, the spherical-cap shape indicates a shape obtained by cutting a sphere with one plane, and a spherical-segment shape indicates a shape obtained by cutting a sphere with two parallel planes.

As illustrated in FIG. 13, the moving member 24B includes the second stopper 22B and the rod-like portion 23. The second stopper 22B has a flat plate-like shape. The diameter of the second stopper 22B is only required to be equal to or larger than the diameter of the air vent hole 20.

Further, in the present embodiment, the moving member 24 is provided to the first stopper 21 by inserting the protrusion 23d into the hole 21b. However, the mode of providing the moving member 24 to the first stopper 21 is not limited thereto. For example, the rod-like portion may have a columnar shape, a male screw may be formed on the outer circumferential surface, a female screw is formed in the first stopper, and those screws are fitted to each other. With this, the rod-like portion may be provided to the first stopper.

Further, in the present embodiment, the rod-like portion 23 and the second stopper 22 form the moving member 24. However, the rod-like portion 23 may be provided to the first stopper. In such a case, the first stopper and the rod-like portion 23 may form the moving member, and the moving member may be provided to the second stopper.

Further, in the present embodiment, the second stopper 22 is formed of a material having a specific gravity smaller than that of the oil. However, the material of the second stopper 22 is not limited thereto. In short, the second stopper 22 is only required to float on the oil. For example, a material having a specific gravity larger than that of the oil may be used for the second stopper, and a hollow may be formed inside the second stopper so that the second stopper floats on the oil. In such a case, it is also desired that the weight of the exhaust valve be set so that equilibrium is achieved while at least a part of the second stopper is exposed above the oil surface.

### Second Embodiment

In the first embodiment of the present invention, the exhaust valve 2 obtained by assembling the first stopper 21 and the moving member 24 is used. However, the mode of the exhaust valve is not limited thereto.

A second embodiment of the present invention is a mode in which the first stopper and the second stopper are not integrated with each other. An exhaust valve 2A according to the second embodiment is described below. Note that the same components as those in the first embodiment are denoted by the same reference numerals, and descriptions thereof are omitted.

Similarly to the exhaust valve 2, the exhaust valve 2A is provided to the surface 15a of the plate 15 of the suction strainer 1. The air vent hole 20 is formed in the surface 15a, and the exhaust valve 2A opens and closes the air vent hole 20.

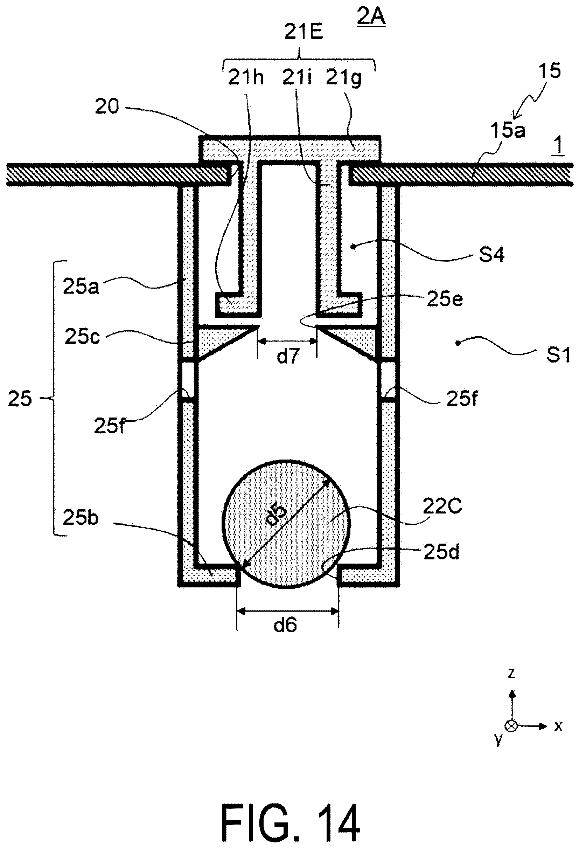

FIG. 14 is a cross-sectional view illustrating an outline of the exhaust valve 2A. The exhaust valve 2A primarily includes a first moving member 21E, the second stopper 22C, and a valve case 25.

The first moving member 21E is formed of a resin or an elastically deformable material. The first moving member 21E includes an upper stopper 21g provided at the upper end portion, the lower stopper 21h provided at the lower end portion, and a rod-like portion 21i coupling the upper stopper 21g and the lower stopper 21h to each other.

The upper stopper 21g has a disc-like shape (or a columnar shape). The diameter of the upper stopper 21g is larger than the hole diameter of the air vent hole 20. The upper stopper 21g is provided at the upper end of the rod-like portion 21i. When the first moving member 21E moves downward, and the upper stopper 21g abuts against the air vent hole 20, the upper stopper 21g closes the air vent hole 20. Note that the shape of the upper stopper 21g is not limited thereto, and may be a spherical shape.

In plan view (as viewed in the +z direction), the rod-like portion 21i is smaller than the air vent hole 20. Further, in plan view, the lower stopper 21h is larger than the air vent hole 20. Therefore, the first moving member 21E moves upward and downward (in the z direction) inside the air vent hole 20, and the first moving member 21E is prevented from coming off from the air vent hole 20 by the upper stopper 21g and the lower stopper 21h.

The lower stopper 21h and the rod-like portion 21i are deformable in a direction in which the diameter is reduced. The rod-like portion 21i is inserted into the air vent hole 20 by pressing the first moving member 21E into the air vent hole 20 from above (the +z side). With this, the first moving member 21E is provided to the surface 15a. The first moving member 21E is movable between a position of closing the air vent hole 20 and a position of opening the air vent hole 20.

The second stopper 22C is provided in the valve case 25. The second stopper 22C is spherical, and is formed to float on the oil.

The valve case 25 is provided on the lower side of the surface 15a of the plate 15 so as to cover the air vent hole 20. The valve case 25 primarily includes a side surface 25a, a bottom surface 25b, and a partition plate 25c.

The side surface 25a has a tubular shape (herein, a cylindrical shape), and the bottom surface 25b is provided in the vicinity of the lower end of the side surface 25a. Note that the shape of the side surface 25a is not limited to a cylindrical shape, and may be a hollow barrel-like shape or the like.

A through-hole 25d (corresponding to a first through hole of the present invention) is formed in the bottom surface 25b. A diameter d6 of the through-hole 25d is smaller than a diameter d5 of the second stopper 22C.

The partition plate 25c partitions a space formed by the side surface 25a and the bottom surface 25b into a lower space S3 into which the second stopper 22C is inserted and an upper space S4 in which the first moving member 21E is provided. A through-hole 25e (corresponding to a second through-hole of the present invention) that causes the lower space S3 and the upper space S4 to communicate with each other is formed in the partition plate 25c. The diameter d6 of the through-hole 25e is smaller than the diameter d4 of the second stopper 22C. The through-hole 25e is positioned above the through-hole 25d.

Note that the partition plate 25c has a plate thickness that is gradually reduced so that the height of the lower surface is increased as approaching the through-hole 25e. However, the shape of the partition plate 25c is not limited thereto.

The second stopper 22C is inserted into the lower space S3. Thus, the second stopper 22C is movable between a position at which the second stopper 22C closes the through-hole 25d and a position at which the second stopper 22C closes the through-hole 25e.

A communication through-hole 25f is formed in the side surface 25a. Through the communication through-hole 25f, the space (the lower space S3) surrounded by the side surface 25a, the bottom surface 25b, and the partition plate 25c, and the space (the space S1, see FIG. 2) outside the valve case 25 communicate with each other. One communication through-hole 25f or a plurality of communication through-holes 25f may be provided.

Next, the functions of the suction strainer 1 and the exhaust valve 2A thus configured are described. First, the suction strainer 1 is attached to the tank body 101 storing the hydraulic oil. When the suction strainer 1 is attached to the inside of the tank body 101, the air accumulating on the lower side of the plate 15 pushes the first moving member 21E upward in the +z direction through the air vent hole 20.

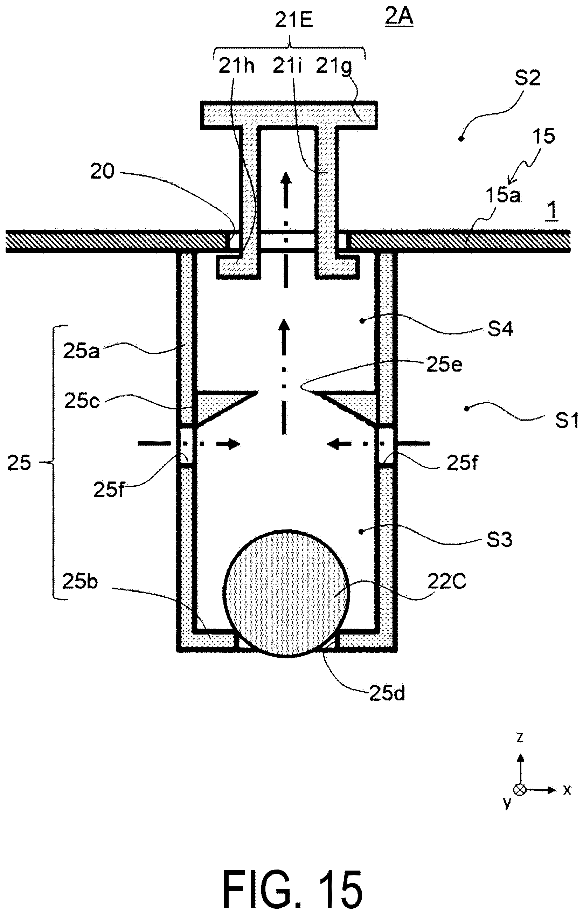

FIG. 15 is a diagram schematically illustrating a state in which the first moving member 21E is pushed upward in the +z direction. As indicated by the two-dot chain line in FIG. 15, the air flows from the space S1 to the lower space S3 through the communication through-hole 25f, flows from the lower space S3 to the upper space S4 through the through-hole 25e, and pushes the first moving member 21E upward in the +z direction. As a result, the air vent hole 20 is opened, and the air accumulating on the lower side of the plate 15 is released from the inside of the strainer portion 10 (see FIG. 2 and the like) to the space S2 inside the tank body 101 (see FIG. 1 and the like). As a result, the suction strainer 1 is set in the tank body 101, and the functionality of the suction strainer 1 can be achieved.

When the hydraulic oil stored in the tank body 101 is suctioned into the hydraulic pump (not illustrated), the filtration member 11 removes dust and the like from the hydraulic oil, and the hydraulic oil flows from the outer side of the filtration member 11 to the inside of the inner tube 12. When the hydraulic oil is suctioned from the outer side of the filtration member 11 to the inside of the strainer portion 10, the air bubbles contained in the hydraulic oil are suctioned together with the hydraulic oil to the inside of the strainer portion 10. When the internal pressure of the suction strainer 1 is higher than the external pressure, the first moving member 21E is pushed upward in the +z direction to open the air vent hole 20 as illustrated in FIG. 15, and the air accumulating on the lower side of the plate 15 is released from the inside of the strainer portion 10 to the tank body 101.

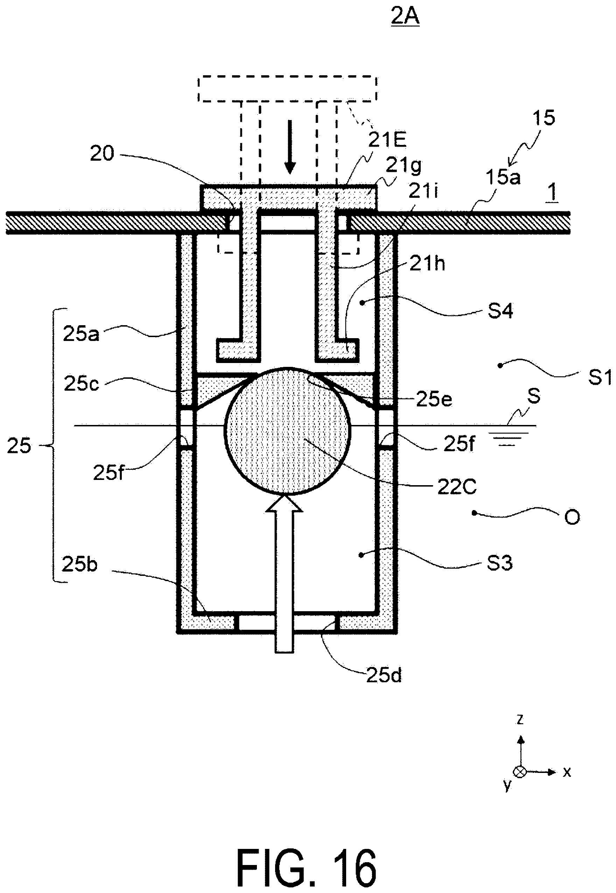

When the hydraulic oil flows out to the inside of the inner tube 12, and an oil surface O rises inside the inner tube 12, the second stopper 22C also rises together with the oil surface O. FIG. 16 is a diagram schematically illustrating a state in which the second stopper 22C is pushed upward in the +z direction by the hydraulic oil (the second stopper 22C is positioned at the upper end). The second stopper 22C is formed of a material having a specific gravity smaller than that of the oil, and floats on the hydraulic oil. Thus, the second stopper 22C also rises together with the oil surface, and the second stopper 22C finally abuts against the partition plate 25c to close the through-hole 25e. As a result, the hydraulic oil can be prevented from spouting from the through-hole 25e, that is, the air vent hole 20. The second stopper 22C is spherical, and easily closes the through-hole 25e having a circular shape.

After that, when the device stops, and the flow of the hydraulic oil stops, the internal pressure of the suction strainer 1 is gradually reduced. Further, when the internal pressure of the suction strainer 1 is equal to or lower than the external pressure, the first moving member 21E moves in the -z direction from a position indicated by the dot line to a position indicated by the solid line in FIG. 16. As a result, the first moving member 21E abuts against the air vent hole 20, the upper stopper 21g closes the air vent hole 20, and the air or the hydraulic oil does not flow from the space S2 to the space S1 through the air vent hole 20.

According to the present embodiment, the exhaust valve 2A includes the first moving member 21E and the second stopper 22C, and the second stopper 22C is formed of a material having a specific gravity smaller than that of the oil. With this, when the space S1 is filled with the hydraulic oil, the second stopper 22C closes the through-hole 25e, and the hydraulic oil can be prevented from spouting from the air vent hole 20.

Further, according to the present embodiment, the second stopper 22C is spherical. Thus, the through-hole 25e having a circular shape is closed easily, and the hydraulic oil is easily prevented from spouting. For example, even when the exhaust valve 2 rises, and the oil surface is inclined due to inclination of the device or the like, the second stopper 22C can close the air vent hole 20.

Note that, in the present embodiment, the second stopper 22C is spherical. However, the shape of the second stopper 22C is not limited thereto. It is desired that the part of the second stopper 22C, which contacts with the through-hole 25e, be formed into a curved shape that is convex outward so as to close the through-hole 25e easily. In other words, it is desired that the second stopper 22C have a part that is spherical, spherical-cap-shaped, spherical-segment-shaped, conical, or truncated-conical. For example, the second stopper 22C may have a biconical shape. Further, the second stopper may be provided with a flange portion having a disc-like shape.

### Third Embodiment

In the first embodiment of the present invention, the air vent hole 20 is provided in the surface 15a (corresponding to the plate-like portion of the present invention) of the suction strainer 1 (corresponding to the filtration device of the present invention), and the air vent hole 20 is provided with the exhaust valve 2. However, the filtration device provided with the exhaust valve and the plate-like portion are not limited thereto. Further, the mode of the exhaust valve is not limited thereto, either.

A third embodiment of the present invention is a mode in which a return filter is provided with the exhaust valve. A return filter 1A serving as the filtration device according the third embodiment and the exhaust valve 2B are described below. Note that the same components as those in the first embodiment are denoted by the same reference numerals, and descriptions thereof are omitted.

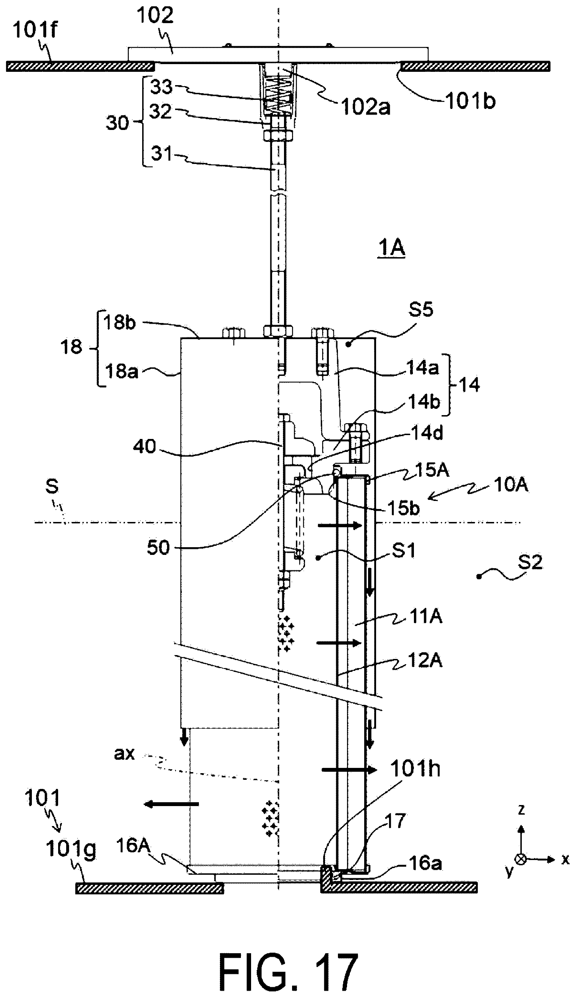

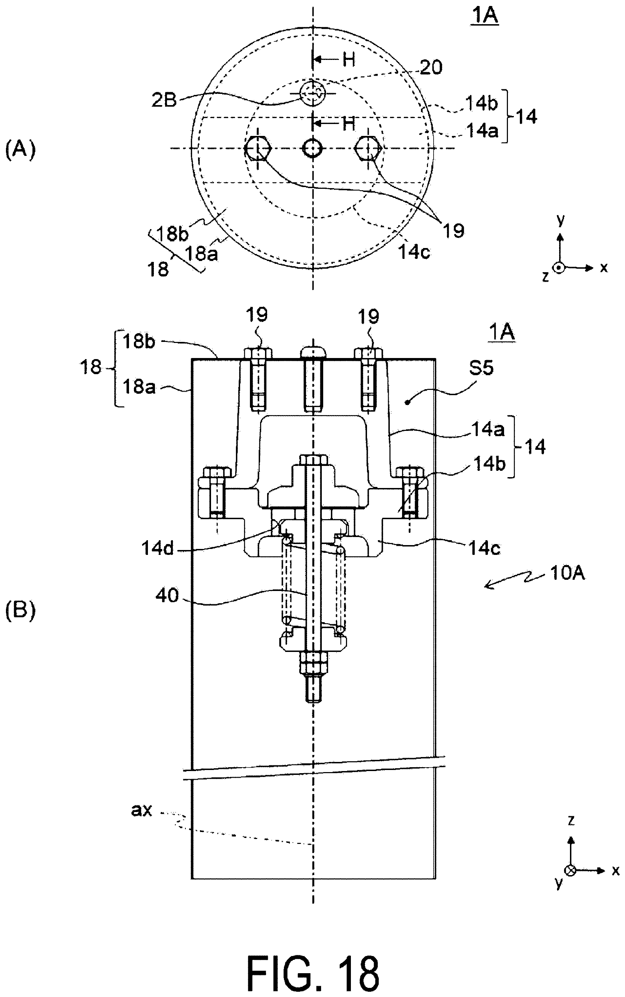

FIG. 17 is a diagram illustrating an outline of the return filter 1A (corresponding to the filtration device of the present invention). In FIG. 17, a partial cross-sectional view is given (hatching indicating the cross-section is omitted). FIG. 18 is a diagram illustrating an outline of the return filter 1A, where (A) is a plan view and (B) is a transparent perspective view of main parts.

The return filter 1A primarily includes a filter element 10A, a coupling member 14, a cover 18, a relief valve 40, and the exhaust valve 2B. However, the relief valve 40 is not necessarily required.

The filter element 10A is provided with the rod portion 30. The rod portion 30 causes the lid body 102 provided to the upper end surface 101f of the tank body 101 and the return filter 1A to communicate with each other. The rod 31 is arranged in a posture extending upward from the filter element 10A. The attachment portion 32 is provided at the upper end portion of the rod 31. The attachment portion 32 is attached to an attachment portion 102a formed on the back surface of the lid body 102. A spring 33 is provided in the attachment portion 32 with its entire length compressed. The spring 33 urges the rod 31, that is, the return filter 1A downward (in the -z direction) while the return filter 1A is provided in the tank body 101. The lower end of the return filter 1A is provided to a bottom surface 101g of the tank body 101, and the return filter 1A is fixed in the inside of the tank body 101 by the spring 33.

The filter element 10A primarily includes a filtration member 11A, an inner tube 12A, an upper plate 15A, and a lower plate 16A. The filtration member 11A, the inner tube 12A< the upper plate 15A, and the lower plate 16A form the filter element. The filter element has a cylindrical shape as a whole. An inflow pipe 101h provided to the bottom surface 101g is provided at the end of the filter element on the -z side, that is, the lower plate 16A.

The filtration member 11 is a tubular member through which the hydraulic oil is filtered. For example, the filtration member 11A is formed by bending sheet-shaped filtration paper in a pleat shape, coupling both ends of the bent thin plate, and rounding it in a cylindrical shape. The filtration paper is manufactured by using a synthetic resin, paper, or the like, and the hydraulic oil is filtered while the hydraulic oil passes through the filtration paper.

The inner tube 12A is a member having a cylindrical shape having openings in both ends, and is formed by using a material having high corrosion resistance (for example, stainless steel or resin). The inner tube 12A has through-holes through which the hydraulic oil passes in its substantially entire region.

The filtration member 11A is provided on the outer side of the inner tube 12A. A height of the filtration member 11A is substantially the same as a height of the inner tube 12A. Note that an outer tube having through-holes through which the hydraulic oil passes may be formed in a substantially entire region on the outer side of the filtration member 11A.

The upper plate 15A is provided at an end on an upper side (+z side) of the filtration member 11A and the inner tube 12A (corresponding to the filtration portion of the present invention), and the lower plate 16A is provided at an end of a lower side (-z side) of the filtration member 11A and the inner tube 12A.

The upper plate 15A and the lower plate 16A are provided so as to cover the ends of the filtration member 11A and the inner tube 12. In other words, the filtration member 11A and the inner tube 12A are sandwiched between the upper plate 15A and the lower plate 16A.

The upper plate 15A covers the filtration member 11A and the entire upper end surface of the inner tube 12. Further, a hollow portion 15b is formed in the upper plate 15A. The hollow portion 15b causes the hollow portion (the space S1) of the filtration member 11A and the inner tube 12 and the outside (a space S5) of the filtration member 11A and the inner tube 12 to communicate with each other.

The upper plate 15A is provided with the coupling member 14. The coupling member 14 couples the filter element and the cover 18 to each other. The coupling member 14 primarily includes a plate-like member 14a and a holding member 14b.

The plate-like member 14a includes the upper end provided to the cover 18 and the lower end provided to the holding member 14b. The lower end of the plate-like member 14a is provided at the upper end of the holding member 14b, and the plate-like member 14a is arranged in a posture extending upward from the holding member 14b. A tubular portion 14c of the holding member 14b is provided inside the hollow portion 15b of the upper plate 15A. A through hole 14d is formed in the tubular portion 14c. The through hole 14d causes the hollow portion of the filtration member 11A and the inner tube 12 and the outside of the filtration member 11A and the inner tube 12 to communicate with each other. The through hole 14d is provided with the relief valve 40.

A sealing member 50 such as an O ring is provided between the tubular portion 14c and the upper plate 15A. Thus, the holding member 14b and the upper plate 15A are fixed to each other so that the hydraulic oil is prevented from leaking from a space between the holding member 14b and the upper plate 15A.

The relief valve 40 is provided to the holding member 14b. While the relief valve 40 is closed, the valve element of the relief valve 40 covers the through hole 14d. When the pressure in the space S1 becomes high due to clogging of the filtration member 11A or the like, the valve element moves upward against the urging force of the elastic member. As a result, the valve element is separated away from the holding member 14b (valve seat), the relief valve 40 is opened, and the hydraulic oil can pass through the through hole 14d. When the pressure in the space S1 becomes low, the valve element moves downward due to the urging force of the elastic member, and the valve element abuts against the holding member 14b.

The cover 18 is provided to the plate-like member 14a. The cover 18 primarily includes a tubular portion 18a having a tubular shape and a plate-like portion 18b provided to the tubular portion 18a. The tubular portion 18a is provided on the outer side of the relief valve 40, the coupling member 14, and a part of (the vicinity of the upper end of) the upper plate 15A and the filtration member 11A. Note that the tubular portion 18a may cover the entirety of the upper plate 15A and the filtration member 11A.

The plate-like portion 18b is provided at the upper end of the tubular portion 18a so as to cover the hollow portion of the tubular portion 18a. In other words, the plate-like portion 18b is provided at the upper end of the return filter 1A. Note that the plate-like portion 18b is not limited to being provided at the upper end of the tubular portion 18a (the return filter 1A), and is only required to be provided in the vicinity of the upper end of the tubular portion 18a (the return filter 1A). For example, the upper end of the tubular portion 18a may be positioned slightly on the +z side with respect to the plate-like portion 18b.

The plate-like portion 18b is fixed to the holding member 14b by a bolt 19. As a result, the cover 18 is provided to the holding member 14b. Note that the mode of providing the cover 18 to the holding member 14b is not limited thereto.

The air vent hole 20 is formed in the plate-like portion 18b. Further, the plate-like portion 18b is provided with the exhaust valve 2B.

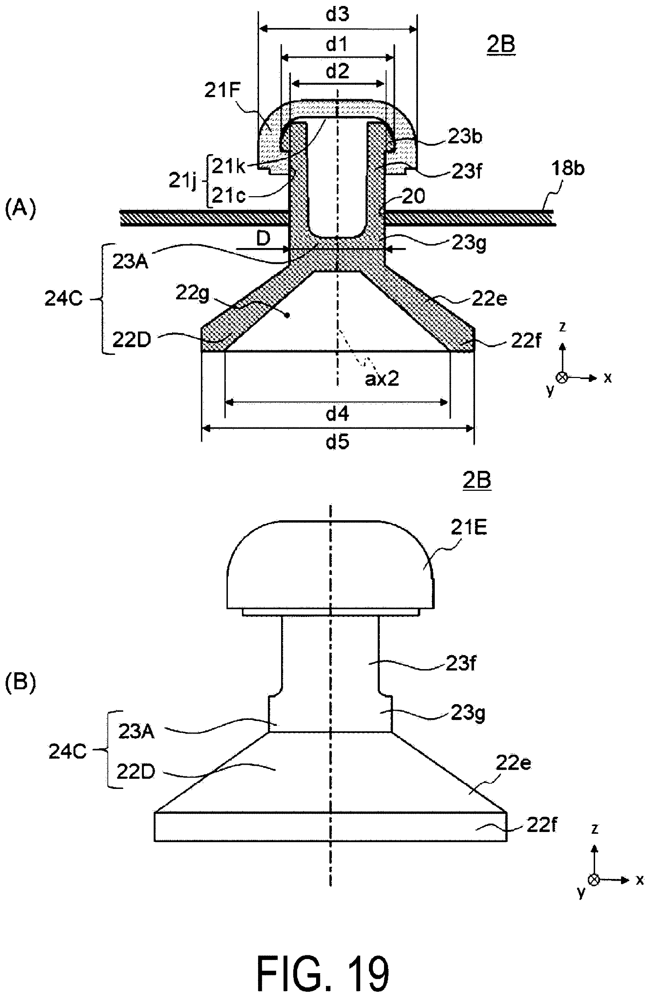

FIG. 19 is a diagram illustrating an outline of the exhaust valve 2B, where (A) is a cross-sectional view (a cross-sectional view taken along the H-H line of FIG. 18) and (B) is a view from the side. The exhaust valve 2B primarily includes a first stopper 21F and a moving member 24C.

The first stopper 21F has a columnar shape with an R-chamfered upper end, and a hollow portion 21j is formed inside. The hollow portion 21j has a hole 21k and the through-hole 21c that causes the hole 21k and the outside of the first stopper 21F to communicate with each other. The diameter d1 of the hole 21k is larger than the diameter d2 of the through-hole 21c.

The first stopper 21F has the diameter d3 larger than the hole diameter D of the air vent hole 20 so as to close the air vent hole 20. Further, the first stopper 21F is formed of an elastically deformable material. The elastically deformable material is rubber, a soft resin, or the like. In the present embodiment, the first stopper 21 is formed of nitrile rubber (NBR).

The moving member 24C is formed of a material having a specific gravity smaller than that of the oil (for example, a resin) so as to float on the oil. The moving member 24C primarily includes a second stopper 22D and a rod-like portion 23A. The second stopper 22D and the rod-like portion 23A are integrated with each other to form the moving member 24C. Note that the expression "integrated with each other to form" in the present invention is a concept that encompasses a structure integrally formed (for example, by molding) and a structure in which separately formed components are integrated to function as a single part.

The second stopper 22D includes a main body portion 22e and a lower end portion 22f. The main body portion 22e has a side surface that is truncated-conical. The lower end portion 22f includes a side surface having a cylindrical shape, and is provided on the lower side of the main body portion 22e. Note that the lower end portion 22f is not necessarily required.

A recessed portion 22g is formed in the lower end surface of the second stopper 22D. The recessed portion 22g is provided. Thus, when the exhaust valve 2B is used to release the air, the air accumulates in the recessed portion 22g, and the exhaust valve 2B easily moves in the +z direction.

The shape of the side surface of the recessed portion 22g is a truncated-conical shape, and is similar (substantially similar) to the shape of the side surface of the main body portion 22e. Further, at the lower end of the second stopper 22D, the diameter d4 of the recessed portion 22g (corresponding to the width of the present invention) is equal to or greater than 0.8 times the diameter d5 of the main body portion 22e (corresponding to the width of the present invention). In the present embodiment, the diameter d4 is equal to or greater than 0.81 times the diameter d5.

As a result, the recessed portion 22g is increased as much as possible, a large amount of air can accumulate in the recessed portion 22g. Note that the term "similar" (substantially similar" is a concept that encompasses a case involving perfect similarity and a case involving a slight difference. For example, even when the inclination angle of the side surface of the recessed portion 22g and the inclination angle of the side surface of the main body portion 22e match with each other, or have a difference of a few degrees, the concept "similar" (substantially similar) in the present invention encompasses such a case.

The rod-like portion 23A is provided on the upper side of the second stopper 22D. The rod-like portion 23A includes a columnar portion 23g provided to the second stopper 22D, two rod-like portion 23f each having a rod-like shape, and the coupling portion 23b provided to one end of the rod-like portion 23f (herein, an end opposite to a side provided with the columnar portion 23g). The rod-like portion 23f protrudes from the upper end of the columnar portion 23g.

Similarly to the rod-like portion 23a, the rod-like portion 23f is a part of the column, and the diameter of the column is smaller than the hole diameter D of the air vent hole 20. A slit is formed along the longitudinal direction of the column, and thus the rod-like portion 23f is formed.

The rod-like portion 23f is deformed by a finger or the like to move the protrusion 23d toward the center line ax2. With this, the protrusion 23d passes through the air vent hole 20 and the through-hole 21c. Further, deformation of a rod-like portion 23j is stored while the protrusion 23d is inserted into the hole 21k. With this, the rod-like portion 23A is provided to the hollow portion 21j, the moving member 24C is assembled to the first stopper 21F.

As a result, the exhaust valve 2B is attached to the plate-like portion 18b, the rod-like portion 23f can slide inside the air vent hole 20. In other words, the exhaust valve 2B is movable between a position at which the first stopper 21F abuts against the air vent hole 20 to close the air vent hole 20 and a position at which the second stopper 22D abuts against the air vent hole 20.

When the rod-like portion 23f is positioned inside the air vent hole 20, the air is released from the air vent hole 20. Further, the side surface of the main body portion 22e of the second stopper 22D is truncated-conical. Thus, when the second stopper 22D abuts against the air vent hole 20, the main body portion 22e completely closes the air vent hole 20, and the hydraulic oil is prevented from spouting.

Next, the functions of the return filter 1A and the exhaust valve 2B thus configured art described. When the engine of a construction machine or the like, in which the return filter 1A is provided, is idling or operating, the hydraulic oil before filtration flows, as illustrated in FIG. 17, from the inflow pipe 101h provided to the bottom surface 101g into the space S1 surrounded by the inner tube 12A, the upper plate 15A, and the lower plate 16A. The hydraulic oil flowing into the space S1 is filtered while flowing through the filtration member 11A from the inner side to the outer side, and flows out to the space S2 in the outside of the return filter 1A and the inside of the tank body 101 or the space S5 in the outside of the filtration member 11A and the inner tube 12 and on the inner side of the cover 18 (see the arrows in FIG. 17).

The cover 18 is provided on the outer side of the filtration member 11A. Thus, the hydraulic oil flowing out to the space S5 after filtration abuts against the cover 18 to flow downward, and flows out from the lower end of the tubular portion 18a to the space S2. The hydraulic oil flowing out to the space S2 is stored in the tank body 101. The oil surface S of the hydraulic oil stored in the tank body 101 is positioned below the upper end of the filtration member 11A and above the lower end of the cover 18.

When the engine of a construction machine or the like, in which the return filter 1A is provided, is operating, an amount of the oil passing through the filtration member 11A is more than an amount of the oil flowing out from the lower end of the tubular portion 18a to the space S2.

The space S5 is a space formed by being surrounded by the cover 18, and hence the air accumulates in the space S5 above the oil surface S. An amount of the oil, which is more than an amount of the oil flowing out from the space S5 to the space S2, flows from the space S1 into the space S5. With this, the pressure in the space S5 is higher than the pressure in the space S2.

As a result, as illustrated in FIG. 19, the air accumulating in the upper part of the space S5 pushes the exhaust valve 2B upward that is provided to the plate-like portion 18b, the first stopper 21F is separated away from the air vent hole 20 to open the air vent hole 20, and the air accumulating in the upper part of the space S5 flows out from the space S5 to the tank body 101. When the air remains inside the cover 18, the oil and the air contact with each other, which may cause a risk that the air is entrained into the oil. Thus, the exhaust valve 2B is used to discharge the air to the outside of the cover 18. With this, the air bubbles are prevented from being mixed into the oil.

When all the air accumulating in the upper part of the space S5 is discharged from the space S5 through the air vent hole 20, the entire space S5 is filled with the hydraulic oil. As a result, the entire filtration member 11A can be used effectively to perform filtration.

The recessed portion 22g is provided in the lower end surface of the second stopper 22D. Thus, the air accumulates in the recessed portion 22g, and the specific gravity of the exhaust valve 2B with respect to the oil is reduced. As a result, the oil easily pushes the exhaust valve 2B upward in the +z direction. Further, the recessed portion 22g is increased so that a large amount of air accumulate in the recessed portion 22g. With this, the exhaust valve 2B easily moves in the +z direction.

Note that the first stopper 21F and the second stopper 22D are separated away from the air vent hole 20, and the air vent hole 20 is always opened while the columnar portion 23g is positioned inside the air vent hole 20. Thus, part of the hydraulic oil flows out from the space S5 through the air vent hole 20. However, the hydraulic oil stored in the space S5 is the hydraulic oil after filtration, and there is no problem even when such oil flows out from the space S5 to the space S2 through the air vent hole 20 and the cover 18. Note that the relief valve 40 may be opened in consideration of safety at the time of clogging of the filtration member 11A or during a cold start. In such a case, the hydraulic oil before passing through the filtration member 11A may be released into the tank 100.

The description now returns to FIG. 17. When the engine of a construction machine or the like, in which the return filter 1A stops or returns to an idling state, a large amount of the hydraulic oil does not flow into the space S5, and the pressure in the space S5 is gradually reduced to the pressure in the space S2. The air vent hole 20 is opened, and thus the air inside the tank body 101 flows into the space S5 through the air vent hole 20 while the pressure in the space S5 is reduced. Further, when the pressure in the space S5 is equivalent to the pressure in the space S2, or the like, the exhaust valve 2B moves in the -z direction, the first stopper 21F abuts against the air vent hole 20 to close the air vent hole 20, and the air or the hydraulic oil is prevented from flowing into the space S5 through the air vent hole 20. Further, the first stopper 21F is elastically deformable. Thus, the first stopper 21F is elastically deformed, and the first stopper 21F exerts an excellent sealing performance.

When the pressure in the space S1 is increased during the operation of the engine, the relief valve 40 is opened so as to prevent damage to the return filter 1A. In this state, the hydraulic oil before filtration and the air forcefully flow out from the space S1 to the space S5 through the through hole 14d. The cover 18 is provided, and thus the air flowing out together with the hydraulic oil from the space S1 does not flow out to the space S2, and accumulates in the space S5. When a certain amount of air flows out to the space S5, the air pushes the exhaust valve 2B upward, and the air is discharged to the upper part of the tank body 101 through the air vent hole 20. As a result, the air mixed in the hydraulic oil can be prevented from being suctioned into the hydraulic oil can be prevented from being (omitted in illustration) via the suction strainer (omitted in illustration).

According to the present embodiment, the first stopper 21F and the moving member 24C are assembled to form one exhaust valve 2B, and the exhaust valve thus obtained is only required to be provided to the plate-like portion 18b. Thus, the exhaust valve 2 with a simple configuration can be obtained. Further, the second stopper 22D is arranged on the lower side of the air vent hole 20. With this, the second stopper 22D closes the air vent hole 20, and the oil can be prevented from spouting from the air vent hole 20. In particular, when the side surface of the main body portion 22e of the second stopper 22D is truncated-conical, the main body portion 22e can securely close the air vent hole 20.

Further, according to the present embodiment, the exhaust valve 2B is provided to the plate-like portion 18b provided at the upper end of the return filter 1A. With this, the air accumulating in the return filter 1A is released to the outside of the return filter 1A, and the air mixed in the hydraulic oil can be prevented from being suctioned into the hydraulic pump.

Note that, in the present embodiment, the recessed portion 22g is provided to reduce the specific gravity of the exhaust valve 2B with respect to the oil. Thus, it is not necessarily required to form the second stopper 22D by a material having a specific gravity smaller than that of the oil. In short, the second stopper 22D is only required to be formed so as to float on the oil. Further, in the present embodiment, the first stopper 21 is formed of rubber, and the moving member 24C is formed of a resin. However, the materials of the first stopper 21 and the moving member 24C are not limited thereto. For example, the first stopper 21 and the moving member 24C may be formed of rubber or a resin.

Further, in the present embodiment, the exhaust valve 2B including the first stopper 21F and the moving member 24C is used. However, the mode of the exhaust valve is not limited thereto. The exhaust valves according to the modification examples are described below. In the following description, descriptions of the same components as those of the exhaust valve 2B are omitted.

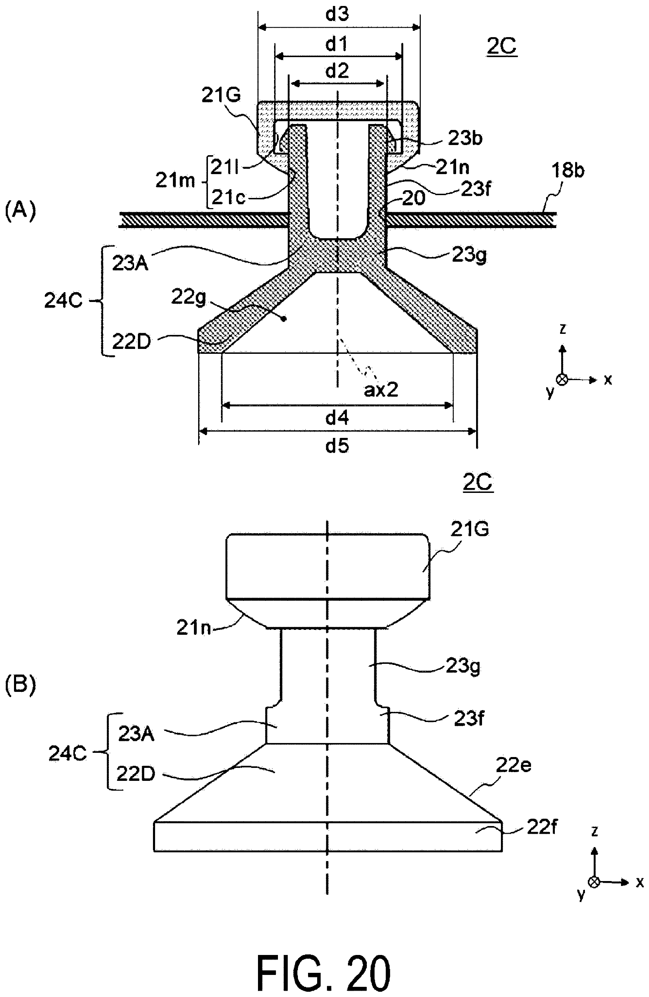

FIG. 20 to FIG. 23 are diagrams illustrating outlines of exhaust valves 2C, 2D, 2E, and 2F according to modification examples. In each of FIG. 20 to FIG. 23, (A) is a cross-sectional view, and (B) is a view from a the side.

The exhaust valve 2C illustrated in FIG. 20 primarily includes a first stopper 21G and the moving member 24C. The first stopper 21G is different from the first stopper 21F in that the shape thereof is a columnar shape without an R-chamfered upper end. The first stopper 21G includes a hollow portion 21m formed therein. The hollow portion 21m includes a hole 211 and the through-hole 21c that causes the hole 211 and the outside of the first stopper 21G to communicate with each other. The diameter d1 of the hole 211 is larger than the diameter d2 of the through-hole 21c.

A curved surface portion 21b having a diameter reduced as approaching the lower end is formed in the vicinity of the lower end of the first stopper 21G. Therefore, the curved surface portion 21b easily closes the air vent hole 20 having a circular shape.

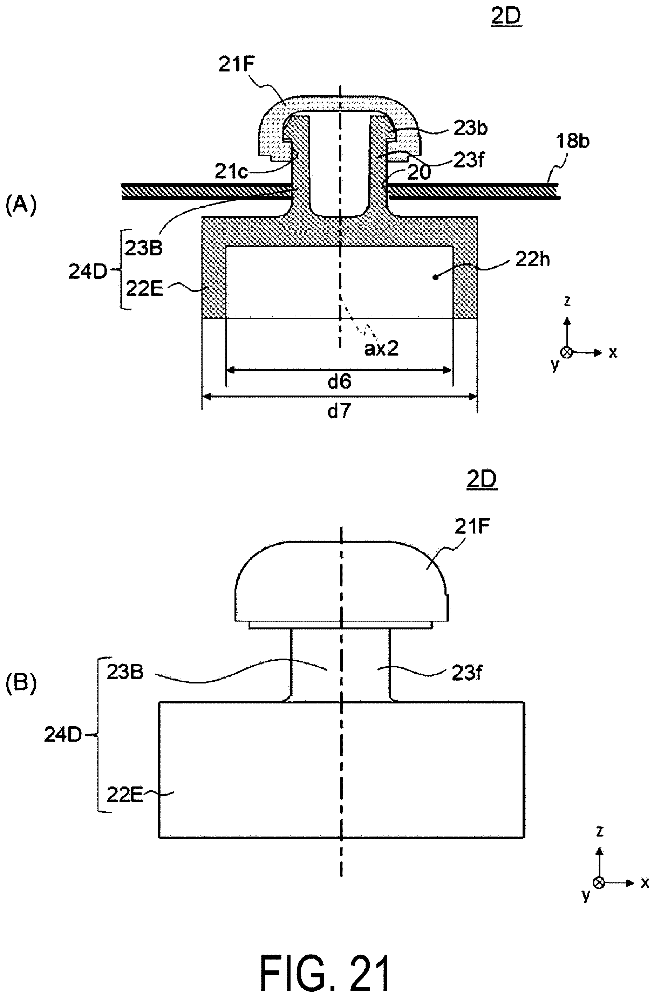

The exhaust valve 2D illustrated in FIG. 21 primarily includes the first stopper 21F and a moving member 24D. The moving member 24D primarily includes a second stopper 22E and a rod-like portion 23B. The second stopper 22E and the rod-like portion 23B are integrated with each other to form the moving member 24D.

The second stopper 22E (corresponding to the main body portion of the present invention) includes a side surface having a columnar shape. A recessed portion 22h is formed in the lower end surface of the second stopper 22E. The recessed portion 22h is provided. Thus, when the exhaust valve 2B is used to release the air, the air accumulates in the recessed portion 22h, and the exhaust valve 2B easily moves in the +z direction.

The shape of the side surface of the recessed portion 22h is substantially similar to the shape of the side surface of the second stopper 22E. Further, at the lower end of the second stopper 22E, a diameter d6 of the recessed portion 22h (corresponding to the width of the present invention) is equal to or greater than 0.8 times a diameter d7 of the second stopper 22E (corresponding to the width of the present invention). In the present embodiment, the diameter d6 is equal to or greater than 0.82 times a diameter d7. As a result, the recessed portion 22h can be increased in size, and a large amount of air can accumulate in the recessed portion 22h. Note that the shape and the size of the recessed portion 22h are not limited thereto.

The rod-like portion 23B is different from the rod-like portion 23A in that the columnar portion 23g is not provided, and the other aspects are similar to those of the rod-like portion 23A.

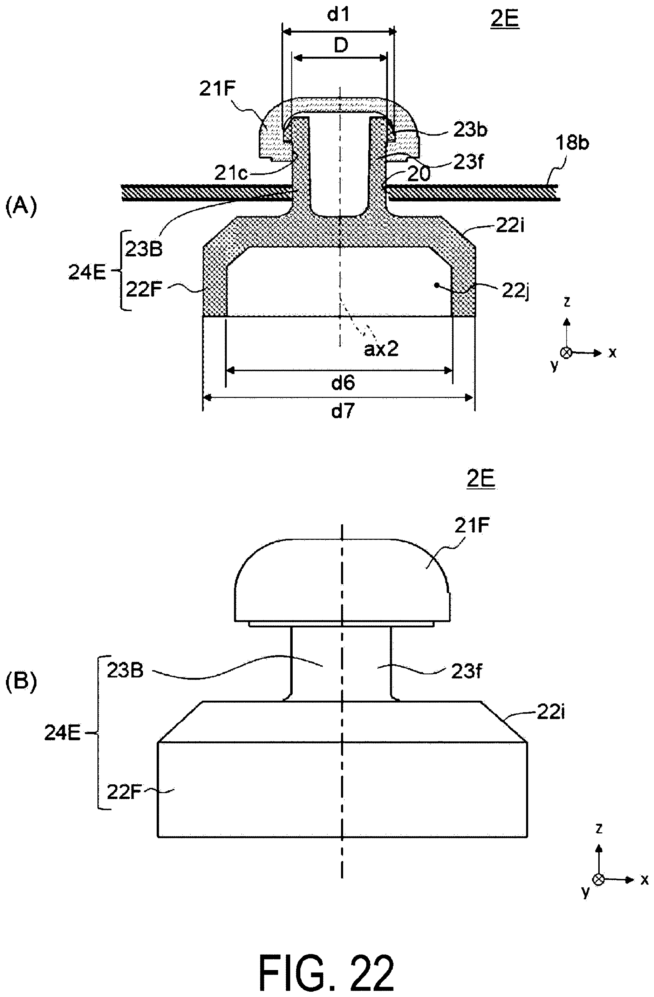

The exhaust valve 2E illustrated in FIG. 22 primarily includes the first stopper 21F and a moving member 24E. The moving member 24E primarily includes a second stopper 22F and the rod-like portion 23B. The second stopper 22F and the rod-like portion 23B are integrated with each other to form the moving member 24E.

The second stopper 22F (corresponding to the main body portion of the present invention) includes a side surface having a columnar shape similarly to the second stopper 22E, but is different from the second stopper 22E in that an inclination portion 22i is provided in the vicinity of the upper end. A recessed portion 22j is formed in the lower end surface of the second stopper 22F. When the exhaust valve 2E is used to release the air, the air accumulates in the recessed portion 22j, and the exhaust valve 2E easily moves in the +z direction. Note that the shape of the recessed portion 22j is not limited thereto.

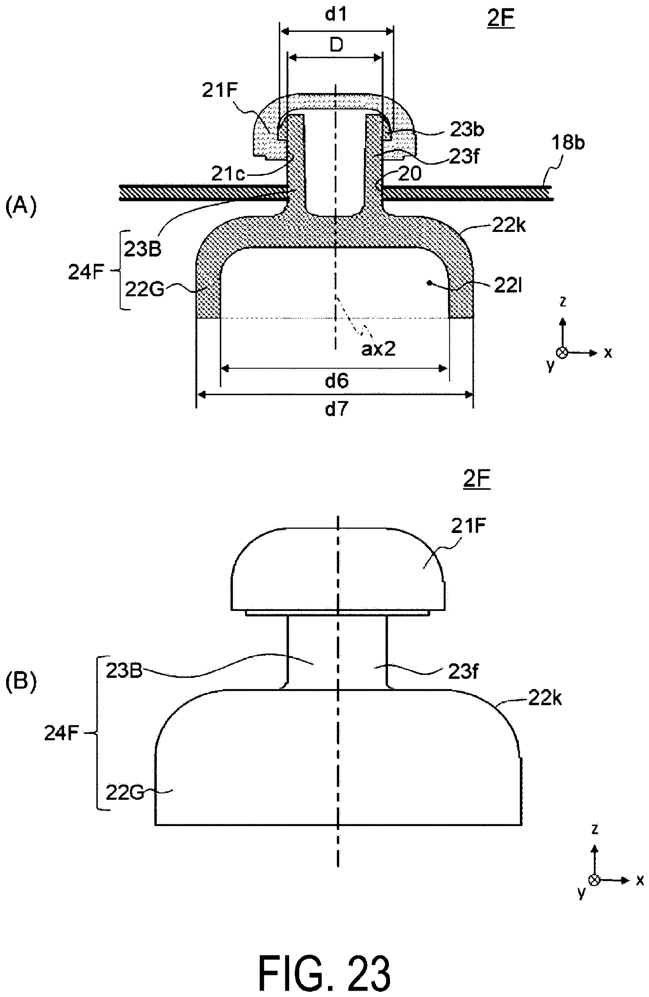

The exhaust valve 2F illustrated in FIG. 23 primarily includes the first stopper 21F and a moving member 24F. The moving member 24F primarily includes a second stopper 22G and the rod-like portion 23B. The second stopper 22G and the rod-like portion 23B are integrated with each other to form the moving member 24F.

The second stopper 22G (corresponding to the main body portion of the present invention) includes a side surface having a columnar shape similarly to the second stopper 22E, but is different from the second stopper 22E in that a curved surface portion 22k that is R-chamfered is provided in the vicinity of the upper end. A recessed portion 221 is formed in the lower end surface of the second stopper 22G. The exhaust valve 2F is used to release the air, the air accumulates in the recessed portion 22l, and the exhaust valve 2F easily moves in the +z direction. Note that the shape of the recessed portion 22l is not limited thereto.

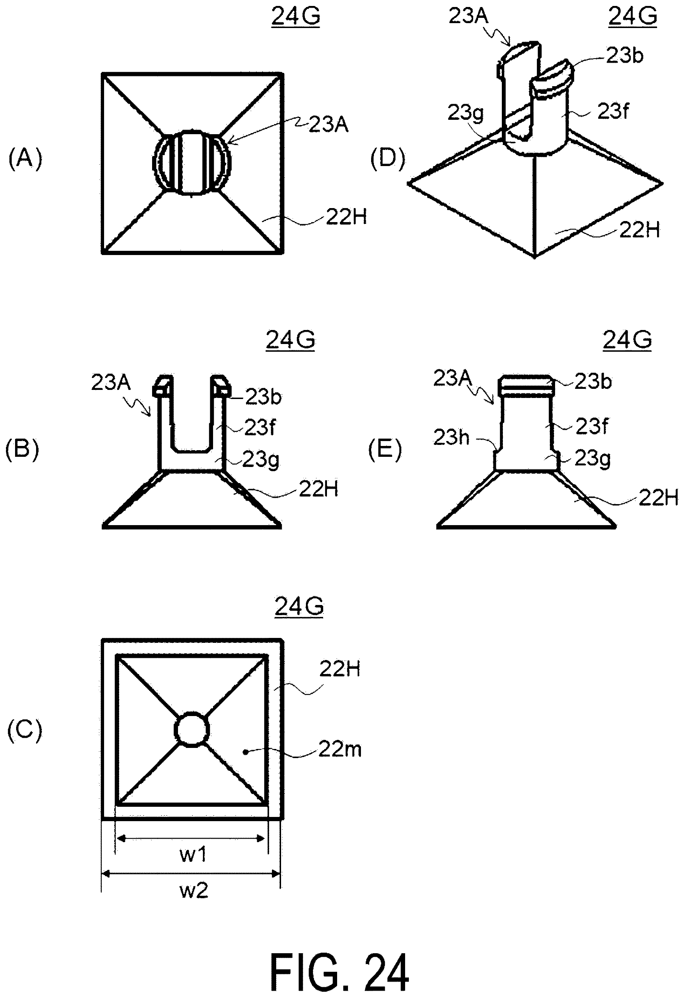

FIG. 24 and FIG, 25 are diagrams illustrating outlines of moving member 24G and 24H of the exhaust valve according to modification examples, where (A) is a plan view (a view from the top), (B) is a front view, (C) is a bottom view (a view from the bottom), (D) is a perspective view, (E) is a side view. The moving members 24G and 24H can be attached to the first stoppers 21F, 21G, and the like.

The moving member 24G illustrated in FIG. 24 primarily includes a second stopper 22H and the rod-like portion 23A. The second stopper 22H and the rod-like portion 23A are integrated with each other to form the moving member 24G. The second stopper 22H (corresponding to the main body portion of the present invention) includes a side surface having a truncated-pyramidal shape, specifically, a quadrangular truncated-pyramidal shape. Note that the second stopper 22H may include a lower end portion having a rectangular tubular shape, and the lower end portion may be provided at the lower end of the main body portion including a side surface having a quadrangular truncated-pyramidal shape.

A recessed portion 22m is formed in the lower end surface of the second stopper 22H. The recessed portion 22m is provided. Thus, the air accumulates in the recessed portion 22m, and the moving member 24G easily moves in the +z direction. Further, in order to increase the recessed portion 22m as much as possible, the shape of the side surface of the recessed portion 22m has a quadrangular truncated-pyramidal shape, in other words, the shape of the side surface of the recessed portion 22m is substantially similar to the shape of the side surface of the second stopper 22H. Moreover, at the lower end of the second stopper 22H, a width w1 of the recessed portion 22m is equal to or greater than 0.8 times a width w2 of the second stopper 22H. However, the shape and the size of the recessed portion 22m are not limited thereto.

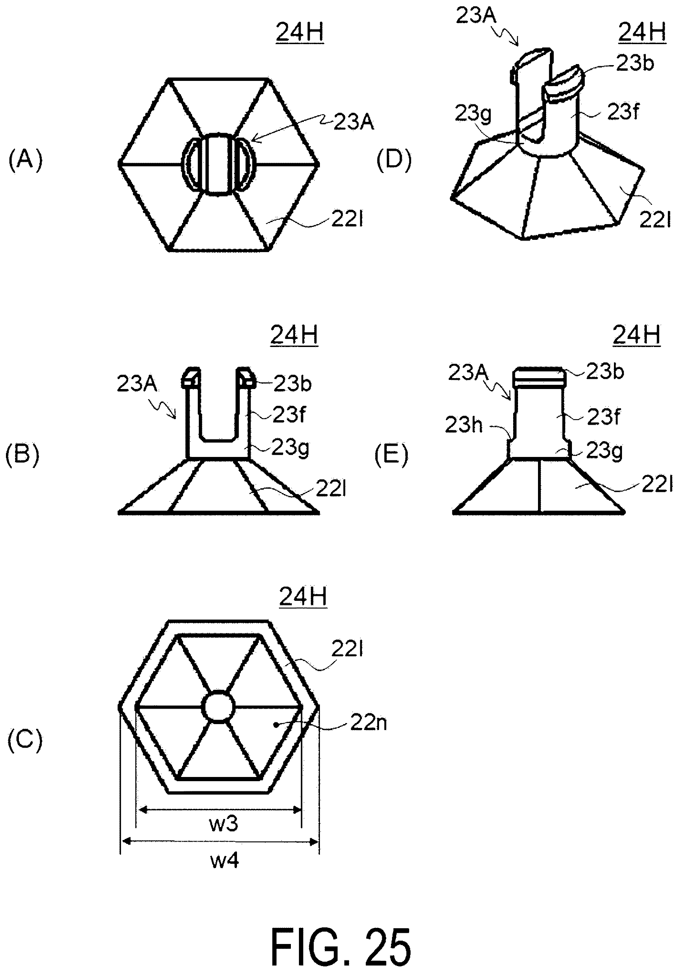

The moving member 24H illustrated in FIG. 25 primarily includes a second stopper 22I and the rod-like portion 23A. The second stopper 22I and the rod-like portion 23A are integrated with each other to form the moving member 24H. The second stopper 22I (corresponding to the main body portion of the present invention) includes a side surface having a truncated-pyramidal shape, specifically, a hexagonal truncated-pyramidal shape. Note that the second stopper 22I may include a lower end portion having a hexagonal tubular shape, and the lower end portion may be provided at the lower end of the main body portion including a side surface having a hexagonal truncated-pyramidal shape.

A recessed portion 22n is formed in the lower end surface of the second stopper 22I. The recessed portion 22n is provided. Thus, the air accumulates in the recessed portion 22n, and the moving member 24G easily moves in the +z direction. Further, in order to increase the recessed portion 22n as much as possible, the shape of the side surface of the recessed portion 22m has a hexagonal truncated-pyramidal shape, in other words, the shape of the side surface of the recessed portion 22m is substantially similar to the shape of the side surface of the second stopper 22I. Moreover, at the lower end of the second stopper 22I, a width w3 of the recessed portion 22n is equal to or greater than 0.8 times a width w4 of the second stopper 22I. However, the shape and the size of the recessed portion 22n are not limited thereto.

### Fourth Embodiment

In the third embodiment of the present invention, the return filter 1A (corresponding to the filtration device of the present invention) is provided with the exhaust valve 2B. However, the filtration device provided with the exhaust valve and the plate-like portion are not limited thereto. Further, the mode of the exhaust valve is not limited thereto, either.

A fourth embodiment of the present invention is a mode in which a return filter without a cover is provided with the exhaust valve. A return filter 1B serving as the filtration device according to the fourth embodiment and the exhaust valve 2G are described below. Note that the same components as those in the first to third embodiments are denoted by the same reference numerals, and descriptions thereof are omitted.

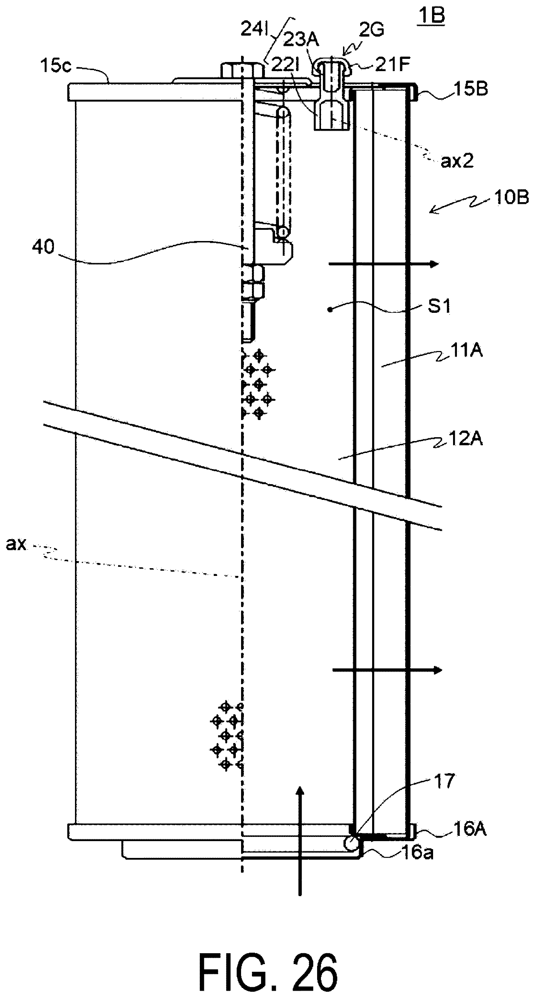

FIG. 26 is a diagram illustrating an outline of the return filter 1B (corresponding to the filtration device of the present invention). In FIG. 26, a partial cross-sectional view is given (hatching indicating the cross-section is omitted). Note that the return filter 1B may be provided with the rod portion 30.

The return filter 1B primarily includes a filter element 10B, the relief valve 40, and the exhaust valve 2G. Note that the return filter 1B can be provided with various modes of the exhaust valve such as the exhaust valves 2, 2A, and 2B in place of the exhaust valve 2G. Further, the relief valve 40 is not necessarily required.

The filter element 10B primarily includes the filtration member 11A, the inner tube 12A, an upper plate 15B, and the lower plate 16A. The upper plate 15B is provided at an end on an upper side (+z side) of the filtration member 11A and the inner tube 12A (corresponding to the filtration portion of the present invention), and covers the filtration member 11A and the entire upper end surface of the inner tube 12A. The upper plate 15B includes a plate-like portion 15c provided at the upper end of the return filter 1B. The plate-like portion 15c is provided with the relief valve 40.

Further, the air vent hole 20 is formed in the plate-like portion 15c. Further, the air vent hole 20 is provided with the exhaust valve 2G. The exhaust valve 2G primarily includes the first stopper 21F and a moving member 24I. The moving member 24I primarily includes a second stopper 22J and the rod-like portion 23A. The second stopper 22J and the rod-like portion 23A are integrated with each other to form the moving member 24I. The second stopper 22J includes a side surface having a columnar shape similarly to the second stopper 22F, but has a length larger than that of the second stopper 22F. As a result, the recessed portion provided at the lower end of the second stopper 22J is increased. Thus, a configuration in which the oil can easily push the exhaust valve 2G upward can be obtained.

When the engine of a construction machine or the like, in which the return filter 1B is provided, is idling or operating, the hydraulic oil before filtration flows from the inflow pipe 101h (omitted in illustration in FIG. 26) provided to the bottom surface 101g (omitted in illustration in FIG. 26) into the space S1 surrounded by the inner tube 12A, the upper plate 15B, and the lower plate 16A. The hydraulic oil flowing into the space S1 is filtered while flowing through the filtration member 11A from the inner side to the outer side, and flows out to the outside of the return filter 1B (see the arrows in FIG. 26). When the air accumulates in the space S1, the air pushes the exhaust valve 2G upward, and the air is discharged to the outside of the return filter 1B.

### Fifth Embodiment

In the third and fourth embodiments of the present invention, the hydraulic oil is filtered while flowing through the filtration member 11A from the inner side to the outer side. However, the direction in which the hydraulic oil flows is not limited thereto.

A fifth embodiment of the present invention is a mode in which the hydraulic oil flows through the filtration member from the outer side to the inner side. A return filter 1C serving as the filtration device according to the fifth embodiment is described below. Note that the same components as those in the first to fourth embodiments are denoted by the same reference numerals, and descriptions thereof are omitted.

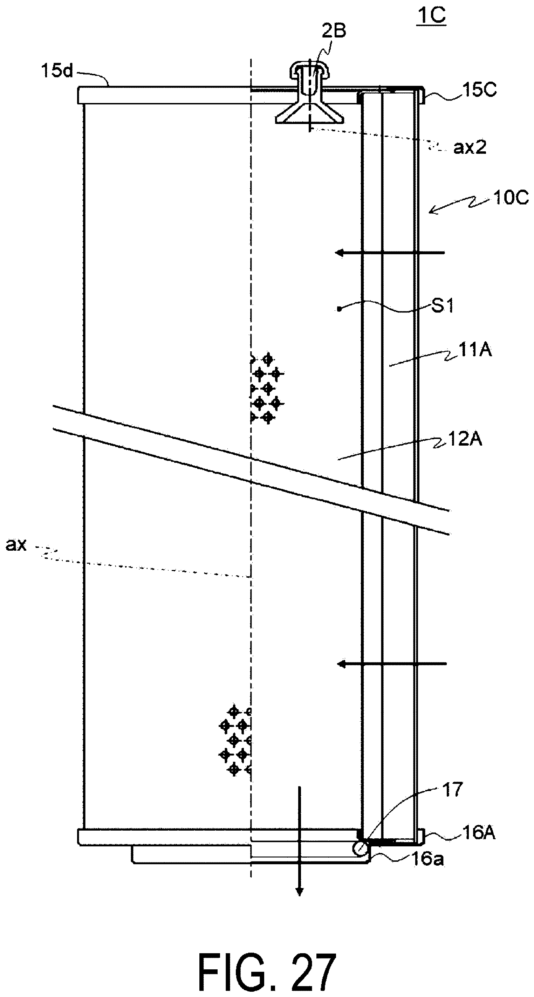

FIG. 27 is a diagram illustrating an outline of the return filter 1C (corresponding to the filtration device of the present invention). In FIG. 27, a partial cross-sectional view is given (hatching indicating the cross-section is omitted). Note that the return filter 1C may be provided with the rod portion 30.

The return filter 1C primarily includes a filter element 10C and the exhaust valve 2B. Note that the return filter 1C may be provided with various modes of the exhaust valve such as the exhaust valve 2 in place of the exhaust valve 2B.

The filter element 10C primarily includes the filtration member 11A, the inner tube 12A, an upper plate 15C, and the lower plate 16A. The upper plate 15C is provided at an end on an upper side (+z side) of the filtration member 11A and the inner tube 12A (corresponding to the filtration portion of the present invention), and covers the filtration member 11A and the entire upper end surface of the inner tube 12A. The upper plate 15C includes the plate-like portion 15d provided at the upper end of the return filter 1C. The air vent hole 20 is formed in the plate-like portion 15d. The air vent hole 20 is provided with the exhaust valve 2B.

When the engine of a construction machine or the like, in which the return filter 1C is provided, is idling or operating, the hydraulic oil before filtration flows into the tank body 101 (omitted in illustration in FIG. 27), is filtered while flowing through the filtration member 11A from the outer side to the inner side, and flows into the space S1 surrounded by the inner tube 12A, the upper plate 15C, and the lower plate 16A. The hydraulic oil after filtration flows out from a pipe (omitted in illustration in FIG. 27) provided to the lower plate 16A.

The embodiments of the present invention are described above in detail with reference to the drawings. However, specific configurations are not limited to the embodiments and also include changes in design or the like without departing from the gist of the invention. For example, in the examples described above, detailed description is made to facilitate understanding of the present invention, and the examples are not necessarily limited to examples including all the configurations described above. In addition, the configuration of an embodiment can be replaced partially with the configurations of other embodiments. Moreover, addition, deletion, replacement, or the like of other configurations can be made on the configurations of the embodiments.

Additionally, in the present invention, "substantially" is a concept not only including the case of being strictly the same, but also including an error and deformation to the extent that a loss of identity does not occur. For example, the term "substantially orthogonal" is not limited to the case of being strictly orthogonal, but includes a concept that includes deviations of several degrees, for example. Further, simple expressions such as orthogonal, parallel, and identical are not to be understood as merely being strictly, for example, orthogonal, parallel, and identical, and include being, for example, substantially parallel, substantially orthogonal, and substantially identical.

Additionally, in the present invention, "vicinity" means to include a region in a certain range (the range can be determined arbitrarily) near a reference position. For example, the term "a vicinity of an end" refers to a range of regions in the vicinity of the end, and is a concept indicating that the end may or need not be included.

### Reference Signs List

1: Suction strainer
1A, 1B, 1C: Return filter
2, 2A, 2B, 2C, 2D, 2E, 2F, 2G: Exhaust valve
10: Strainer portion
10A, 10B, 10C: Filter element
11, 11A: Filtration member
12, 12A: Inner tube
14: Coupling member
14a: Plate-like member
14b: Holding member
14c: Tubular portion
14b: Through-hole
15, 16: Plate
15A, 15B, 15C: Upper plate
15a: Surface
15b: Hollow portion
15c, 15d: Plate-like portion
16A: Lower plate
16a: Fitting portion
17: Sealing member
18: Cover
18a: Tubular portion
18b: Plate-like portion
19: Bolt
20: Air vent hole
21, 21A, 21B, 21C, 21D, 21F, 21G: First stopper
21E: First moving member
21a: Hollow portion
21B, 21k, 21l: Hole
21c: Through-hole
21d: Surface
21e: Tapered surface
21f: Sealing surface
21g: Upper stopper
21h: Lower stopper
21i: Rod-like portion
21j, 21m: Hollow portion
21n: Curved surface portion
22, 22A, 22B, 22C, 22D, 22E, 22F, 22G, 22H, 22I, 22J: Second stopper
22a, 22e: Main body portion
22b, 22d: Flat portion
22c: Main body portion
22f: Lower end portion
22g, 22h: Recessed portion
22i: Inclination portion
22j, 22l, 22m, 22n: Recessed portion
22k: Curved surface portion
23, 23A, 23B, 23a: Rod-like portion
23b: Coupling portion
23d: Protrusion
23e: Slit
23f: Rod-like portion
23g: Columnar portion
23j: Rod-like portion
24, 24A, 24B, 24C, 24D, 24F, 24G, 24H, 24I: Moving member
25: Valve case
25a: Side surface
25b: Bottom surface
25c: Partition plate
25d, 25e: Through-hole
25f: Communication hole
30: Rod portion
31: Rod
32: Attachment portion
33 Spring
40: Relief valve
50: Sealing member
100: Hydraulic oil tank
101: Tank body
101a: Inflow port
101b, 101c: Opening
101d: Outflow port
101e: Partition plate
101f: Upper end surface
101g: Bottom surface
101h: Inflow pipe
102, 103: Lid body
102a: Attachment portion
104: Suction pipe
105: Bolt
110: Return filter

## Claims

1. An exhaust valve provided to a plate-like portion provided in a vicinity of an upper end of a filtration device installed in a tank for storing oil, the exhaust valve comprising:
a rod-like portion inserted into an air vent hole formed in the plate-like portion;
a first stopper provided at an upper end of the rod-like portion; and
a second stopper provided at a lower end of the rod-like portion, wherein
the second stopper and the rod-like portion integrally form a moving member,
the moving member is formed to float on oil,
a hollow portion provided with one end of the rod-like portion is formed in the first stopper, and
the rod-like portion is movable between a position at which the first stopper abuts against the air vent hole to close the air vent hole and a position at which the second stopper abuts against the air vent hole.

2. The exhaust valve according to claim 1, wherein
the first stopper and the second stopper are formed of different materials.

3. The exhaust valve according to claim 1 or 2, wherein
the first stopper is formed of an elastically deformable material.

4. The exhaust valve according to any one of claims 1 to 3, wherein
the second stopper has a part that is spherical, hemispherical, spherical-cap-shaped, spherical-segment-shaped, conical, or truncated-conical.

5. The exhaust valve according to any one of claims 1 to 3, wherein
the second stopper includes a main body portion having a side surface that is truncated-conical, truncated-pyramidal, or columnar, and
a recessed portion is formed in a lower end surface of the second stopper.

6. The exhaust valve according to claim 5, wherein
a side surface of the recessed portion has a shape substantially similar to a shape of the side surface of the main body portion, and
at a lower end of the second stopper, a width of the recessed portion is equal to or greater than 0.8 times a width of the main body portion.

7. A filtration device installed in a tank for storing oil, the filtration device comprising:
a filtration portion having a tubular shape;
a plate-like portion covering an entire region of an upper end of the filtration portion and having an air vent hole formed therein; and
an exhaust valve inserted into the air vent hole, wherein
the exhaust valve includes a rod-like portion inserted into the air vent hole, a first stopper provided at an upper end of the rod-like portion, and a second stopper provided at a lower end of the rod-like portion,
the second stopper and the rod-like portion integrally form a moving member,
the moving member is formed to float on oil,
a hollow portion provided with one end of the rod-like portion is formed in the first stopper, and
the exhaust valve is movable between a position at which the first stopper abuts against the air vent hole to close the air vent hole and a position at which the second stopper abuts against the air vent hole.

8. A filtration device installed in a tank for storing oil, the filtration device comprising:
a filtration portion having a tubular shape;
an upper plate covering an entire region of an upper end of the filtration portion;
a coupling member being provided to the upper plate and protruding upward from the upper plate;
a cover provided to the coupling member, the cover including a tubular portion and a plate-like portion, the tubular portion being provided to at least part of the filtration portion and on an outer side of the coupling member, and the plate-like portion being provided in a vicinity of an upper end of the tubular portion, covering a hollow portion of the tubular portion, and having an air vent hole formed therein; and
an exhaust valve inserted into the air vent hole, wherein
the exhaust valve includes a rod-like portion inserted into the air vent hole, a first stopper provided at an upper end of the rod-like portion, and a second stopper provided at a lower end of the rod-like portion,
the second stopper and the rod-like portion integrally form a moving member,
the moving member is formed to float on oil,
a hollow portion provided with one end of the rod-like portion is formed in the first stopper, and
the exhaust valve is movable between a position at which the first stopper abuts against the air vent hole to close the air vent hole and a position at which the second stopper abuts against the air vent hole.

9. The filtration device according to claim 8, wherein
the coupling member has a through-hole formed therein that communicates a hollow portion of the filtration portion and an outside of the filtration portion with each other,
the hole is provided with a relief valve, and
the relief valve is arranged on an inner side of the cover.
